# EUROPEAN PATENT APPLICATION

(11) **EP 4 574 872 A1**
(43) Date of publication of application: **25.06.2025**
(21) Application number: 24767075.5
(22) Date of filing: 01.03.2024
(51) Int. Cl.: C08G 18/28, C08G 18/38, C09K 3/18, D06M 13/398, D21H 17/34, D21H 17/49, D21H 19/20, D21H 19/24, D21H 21/16

(54) **FLUORINE-CONTAINING COMPOUND**

(30) Priority: 03.03.2023 JP 2023033219
(71) Applicant: DAIKIN INDUSTRIES, LTD., Osaka-shi, Osaka 530-0001 (JP)
(72) Inventor: SHIBATA, Shun, Osaka-Shi, Osaka 530-0001 (JP); YAMAMOTO, Ikuo, Osaka-Shi, Osaka 530-0001 (JP); KASHIWAGI, Masato, Osaka-Shi, Osaka 530-0001 (JP); MATSUDA, Michio, Osaka-Shi, Osaka 530-0001 (JP); FUKUMORI, Masaki, Osaka-Shi, Osaka 530-0001 (JP); ISHII, Daiki, Osaka-Shi, Osaka 530-0001 (JP)
(74) Representative: Hoffmann Eitle
(86) International application number: PCT/JP2024/007856
(87) International publication number: WO 2024/185707

(57) **Abstract**

Provided is a novel fluorine-containing compound by means of a fluorine-containing compound which has: a moiety derived from an active hydrogen-containing compound (a); a moiety derived from an active hydrogen-reactive compound (b); and -NHCO- derived from the compound (a) and the compound (b). The compound (a) includes a compound (a1) having Rf1 or Rf2 or the compound (b) includes a compound (b1) having Rf1 or Rf2. Rf1 is -CF3, -CF2H or -CFH2. Rf2 is -CF2- or -CFH-. Rf1 and Rf2 are not a part of a fluoroalkyl group having 2 or more carbon atoms.

## Description

### Technical Field

The present disclosure relates to a fluorine-containing compound.

### Background Art

Certain non-fluorine polymers are known to impart oil resistance when used for surface treatment of substrates (Patent Literature 1).

### Citation List

### Patent Literature

[Patent Literature 1] WO2020-054856

### Summary of Invention

### Technical Problem

An object of the present disclosure is to provide a novel fluorine-containing compound.

### Solution to Problem

The present disclosure includes the following aspects.

### [Item 1]

A fluorine-containing compound comprising:
a moiety derived from an active hydrogen-containing compound (a);
a moiety derived from an active hydrogen reactive compound (b); and
-NHCO- derived from the compound (a) and the compound (b),
wherein
the compound (a) comprises a compound (a1) having R^{f1} or R^{f2}, or the compound (b) comprises a compound (b1) having R^{f1} or R^{f2},
R^{f1} is -CF₃, -CF₂H or -CFH₂,
R^{f2} is -CF₂- or -CFH-,
and R^{f1} and R^{f2} do not constitute a moiety of a fluoroalkyl group having 2 or more carbon atoms.

### [Item 2]

The fluorine-containing compound according to item 1, wherein the fluorine-containing compound has an oxygen atom or a nitrogen atom in a position adjacent to the R^{f1}, and has an oxygen atom or a nitrogen atom in at least one of positions adjacent to the R^{f2}.

### [Item 3]

The fluorine-containing compound according to item 1 or 2, wherein
the R^{f1} is CF₃-, and
the R^{f2} is -CF₂-.

### [Item 4]

The fluorine-containing compound according to any one of items 1 to 3, wherein the compound (a) comprises alcohol, the compound (b) comprises isocyanate and the fluorine-containing compound is polyurethane.

### [Item 5]

The fluorine-containing compound according to any one of items 1 to 4, wherein the compound (a1) or the compound (b1) comprises a group represented by the formula:

-Y^{f}-Z^{f}_{α}-

wherein, independently at each occurrence,
Y^{f} is a 1+α valent group composed of one or more selected from the group consisting of Y^{f1} and Y^{f2},
Y^{f1} is a group composed of one or more selected from the group consisting of a direct bond, -O-, -C(=O)-, - C(=NR')-, -S-, -S(=O)₂-, -NR'-, -C(OR')R'-, -C(OR')(-)₂ and -N(-)₂, wherein R' is a hydrogen atom or an organic group,
Y^{f2} is a group composed of one or more selected from the group consisting of an aliphatic group and an aromatic group,
Z^{f} is R^{f1} or a hydrocarbon group having 2 or more and 40 or less carbon atoms and including R^{f1} or R^{f2}; and
α is 1 to 3.

### [Item 6]

The fluorine-containing compound according to any one of items 1 to 5, wherein the compound (a1) or the compound (b1) comprises a group represented by the formula:

-Y^{f11}-(Y^{f21}-Y^{f12})_{β}-Y^{f22}-Y^{f13}-Z^{f}

wherein, independently at each occurrence,
Y^{f11} is a direct bond, -O-, -NH- or -C(=O)-,
Y^{f21} is a group composed of one or more selected from the group consisting of an aliphatic group and an aromatic group,
Y^{f12} is a group composed of one or more selected from the group consisting of -O-, -C(=O)-, -C(=NR')-, -S-, - S(=O)₂-, -NR'- and -C(OR')R'-, wherein R' is a hydrogen atom or an organic group,
β is 0 to 3,
Y^{f22} is a group composed of one or more selected from the group consisting of an aliphatic group and an aromatic group,
Y^{f13} is -O-, -O-C(=O)-O-, -O-C(=O)-NR'-, -NR'-, -NR'-C(=O)-O-, -NR'-C(=O)-NR'-, -C(=O)-O-, -C(=O)-NR'- or - SO₂NR'-, wherein R' is a hydrogen atom or an organic group, and
Z^{f} is R^{f1} or a hydrocarbon group having 2 or more and 40 or less carbon atoms and including R^{f1} or R^{f2}.

### [Item 7]

The fluorine-containing compound according to item 6,
wherein
Y^{f22} is a group represented by the formula:

   -Y^{f221}-Y^{f222}-
wherein
   Y^{f221} is a direct bond or a hydrocarbon group having 2 to 40 carbon atoms, and
   Y^{f222} is a direct bond or a phenylene group,
Y^{f13} is -O- or -NR'-, wherein R' is a hydrogen atom or an organic group,
β is 0 or 1, and
Z^{f} is R^{f1}.

### [Item 8]

The fluorine-containing compound according to any one of items 1 to 7, wherein the compound (a) comprises the compound (a1).

### [Item 9]

The fluorine-containing compound according to item 1 or 2, wherein the compound (a) comprises an active hydrogen-containing compound (a2) comprising a hydrocarbon group having 6 or more and 40 or less carbon atoms.

### [Item 10]

The fluorine-containing compound according to item 9, wherein the compound (a2) is a sugar alcohol and/or hydroxy acid in which a hydrocarbon group having 6 or more and 40 or less carbon atoms is modified.

### [Item 11]

The fluorine-containing compound according to any one of items 1 to 10, wherein the compound (a) comprises another active hydrogen-containing compound (a3).

### [Item 12]

The fluorine-containing compound according to item 11, wherein the compound (a3) comprises a chain extender.

### [Item 13]

The fluorine-containing compound according to any one of items 1 to 12, wherein the compound (b) is selected from the following compounds:
an aromatic polyisocyanate selected from tolylene diisocyanate (2,4- or 2,6-tolylene diisocyanate or a mixture thereof) (TDI), phenylene diisocyanate (m-, p-phenylene diisocyanate or a mixture thereof, 4,4'-diphenyl diisocyanate, diphenylmethane diisocyanate (4,4'-, 2,4' or 2,2'-diphenylmethane diisocyanate or a mixture thereof) (MDI), 4,4'-toluidine isocyanate (TODI), 4,4'-diphenyl ether diisocyanate, xylylene diisocyanate (1,3- or 1,4-xylylene diisocyanate or a mixture thereof) (XDI), tetramethyl xylylene diisocyanate (1,3- or 1,4-tetramethylxylylene diisocyanate or a mixture thereof) (TMXDI), ω,ω'-diisocyanate-1,4-diethylbenzene, naphthalene diisocyanate (1,5-, 1,4- or 1,8-naphthalene diisocyanate or a mixture thereof) (NDI), triphenylmethane triisocyanate, tris(isocyanate phenyl)thiophosphate, polymethylene polyphenylene polyisocyanate, nitrodiphenyl-4,4'-diisocyanate, 3,3'-dimethyldiphenylmethane-4,4'-diisocyanate, 4,4'-diphenylpropane diisocyanate and 3,3'-dimethoxydiphenyl-4,4'-diisocyanate;
an acyclic aliphatic polyisocyanate selected from trimethylene diisocyanate, 1,2-propylene diisocyanate, butylene diisocyanate (tetramethylene diisocyanate, 1,2-butylene diisocyanate, 2,3-butylene diisocyanate, 1,3-butylene diisocyanate), hexamethylene diisocyanate, pentamethylene diisocyanate, 2,2,4-trimethylhexamethylene diisocyanate, 2,4,4-trimethylhexamethylene diisocyanate, 2,6-diisocyanatomethylcaproate, lysine diisocyanate, lysine ester triisocyanate, 1,6,11-undecane triisocyanate, 1,3,6-hexamethylene triisocyanate, trimethylhexamethylene diisocyanate and decamethylene diisocyanate;
an alicyclic polyisocyanate selected from 1,3-cyclopentane diisocyanate, 1,3-cyclopentene diisocyanate, cyclohexane diisocyanate (1,4-cyclohexane diisocyanate, 1,3-cyclohexane diisocyanate), 3-isocyanatomethyl-3,5,5-trimethylcyclohexyl isocyanate (isophorone diisocyanate, IPDI), methylene bis(cyclohexyl isocyanate (4,4'-, 2,4'- or 2,2'-methylene bis(cyclohexyl isocyanate or a mixture thereof) (hydrogenated MDI), methylcyclohexane diisocyanate (methyl-2,4-cyclohexane diisocyanate, methyl-2,6-cyclohexane diisocyanate, bis(isocyanatomethyl)cyclohexane (1,3- or 1,4-bis(isocyanatomethyl)cyclohexane or a mixture thereof) (hydrogenated XDI), dimer acid diisocyanate, transcyclohexane 1,4-diisocyanate, hydrogenated tolylene diisocyanate (hydrogenated TDI) and hydrogenated tetramethylxylylene diisocyanate (hydrogenated TMXDI);
a bridged alicyclic polyisocyanate selected from norbornene diisocyanate, norbornane diisocyanatomethyl, bicycloheptane triisocyanate, diisocyanatomethyl bicycloheptane and di(diisocyanatomethyl)tricyclodecane; 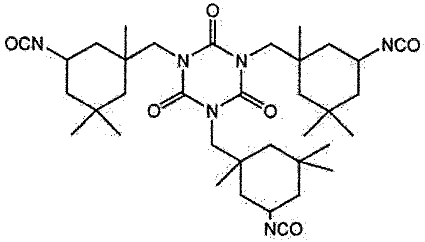 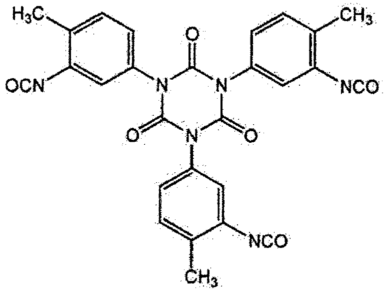 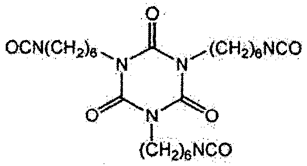 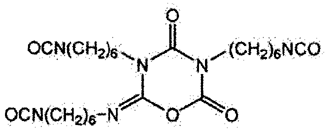 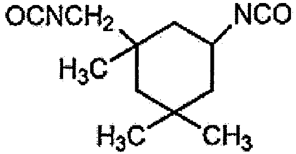 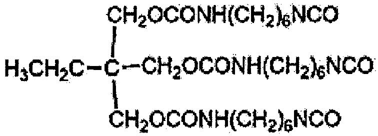 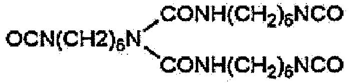 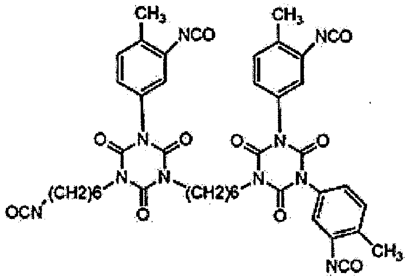 and
a compound selected from a multimer (dimer, trimer, pentamer, heptamer, uretidinedione, uretonimine, isocyanurate modified product and polycarbodiimide), a biuret modified product and other derivatives of the above.

### [Item 14]

The fluorine-containing compound according to item 13, wherein
the compound (a) comprises a compound (a1), and
the compound (a1) comprises a group represented by the formula:

   -Y^{f11}-(Y^{f21}-Y^{f12})_{β}-Y^{f22}-Y^{f13}-Z^{f}

   wherein, independently at each occurrence,
Y^{f11} is a direct bond, -O-, -NH- or -C(=O)-,
Y^{f21} is a group composed of one or more selected from the group consisting of an aliphatic group and an aromatic group,
Y^{f12} is a group composed of one or more selected from the group consisting of -O-, -C(=O)-, -C(=NR')-, -S-, - S(=O)₂-, -NR'- and -C(OR')R'-, wherein R' is a hydrogen atom or an organic group,
β is 0 to 3,
Y^{f22} is a group composed of one or more selected from the group consisting of an aliphatic group and an aromatic group,
Y^{f13} is -O-, -O-C(=O)-O-, -O-C(=O)-NR'-, -NR'-, -NR'-C(=O)-O-, -NR'-C(=O)-NR'-, -C(=O)-O-, -C(=O)-NR'- or - SO₂NR'-, wherein R' is a hydrogen atom or an organic group, and
Z^{f} is -CF₃.

### [Item 15]

A dispersion comprising the fluorine-containing compound according to any one of items 1 to 14 and a liquid medium.

### [Item 16]

A water- and oil-repellent agent comprising the fluorine-containing compound according to any one of items 1 to 14.

### [Item 17]

The water- and oil-repellent agent according to item 16, further comprising another non-fluorine water- and oil-repellent component.

### [Item 18]

The water- and oil-repellent agent according to item 16 or 17, which is for a textile product or a paper product.

### [Item 19]

A method for producing a treated substrate, comprising treating the substrate with the water- and oil-repellent agent according to any one of items 16 to 18.

### [Item 20]

The production method according to item 19, wherein the substrate is a textile product or a paper product.

### [Item 21]

A product to which the fluorine-containing compound according to any one of items 1 to 14 is adhered.

### Advantageous Effect of Invention

The present disclosure can provide a novel fluorine-containing compound.

### Description of Embodiments

### <Definition of Terms>

As used herein, the "n valent group" refers to a group having n bonds, i.e., a group forming n bonds. The "n valent organic group" refers to a n valent group containing carbon. Such organic groups are not limited, but can be hydrocarbon groups or derivatives thereof. The derivative of the hydrocarbon group refers to a group that has one or more of N, O, S, Si, amide, sulfonyl, siloxane, carbonyl, carbonyloxy, halogen and the like at the end or in the molecular chain of a hydrocarbon group.

As used herein, the "hydrocarbon group" refers to a group containing carbon and hydrogen and a group in which a hydrogen atom is removed from the hydrocarbon. Such hydrocarbon groups are not limited, but include C₁₋₄₀ hydrocarbon groups, such as an aliphatic hydrocarbon group and an aromatic hydrocarbon group. The above "aliphatic hydrocarbon group" may be either linear, branched, or cyclic, and may be either saturated or unsaturated. The hydrocarbon group may include one or more ring structures. In an explicit term, the hydrocarbon group may be substituted by one or more substituents.

Whether or not the phrases "independently at each occurrence", "independently with each other", "each independently" or similar expressions are explicitly described herein, unless otherwise described that they are exceptions, when a plurality of terms (symbols) that can occur in a chemical structure is defined, such definition is applied independently to each occurrence.

The chemical structures described herein should be understood not to encompass chemical structures that are recognized by those skilled in the art as being chemically impossible or extremely unstable.

### <Fluorine-containing compound>

The fluorine-containing compound in the present disclosure comprises:
(a) a moiety derived from an active hydrogen-containing compound;
(b) a moiety derived from an active hydrogen reactive compound; and
-NHCO- derived from the compound (a) and the compound (b).

### {Characteristics of fluorine-containing compound}

The fluorine-containing compound in the present disclosure adheres to a substrate and imparts liquid repellency (e.g., oil-repellency, water-repellency, oil resistance, water resistance) to the substrate.

The fluorine-containing compound may have a HD (n-hexadecane) contact angle of 10° or more, 15° or more, 25° or more, 35° or more, 40° or more, 45° or more, 55° or more, or 65° or more, and preferably 30° or more, and 100° or less, 90° or less or 75° or less. A HD contact angle of the fluorine-containing compound of the lower limit or more can impart good liquid-repellency (in particular oil-repellency) to a substrate. The HD contact angle is a static contact angle of a fluorine-containing compound to a spin-coated film, which is obtained by dropping 2 µL of HD on a spin-coated film and measuring the contact angle one second after the droplet reaches the film.

The fluorine-containing compound may have a water contact angle of 35° or more, 40° or more, 45° or more, 50° or more, 55° or more, 65° or more, 75° or more, 85° or more, 90° or more, or 100° or more, and 160° or less, 140° or less, 130° or less, 120° or less, 110° or less, 100° or less or 90° or less. A water contact angle of the fluorine-containing compound of the lower limit or more can impart good liquid-repellency (in particular water-repellency) to a substrate. The water contact angle is a static contact angle of a fluorine-containing compound to a spin-coated film, which is obtained by dropping 2 µL of water on a spin-coated film and measuring the contact angle one second after the droplet reaches the film.

The fluorine-containing compound may have a weight average molecular weight of 3,000 or more, 5,000 or more, 10,000 or more, 30,000 or more, 100,000 or more, 300,000 or more, or 500,000 or more, and 1,000,000 or less, 750,000 or less, 500,000 or less, 300,000 or less, 100,000 or less, 75,000 or less, 50,000 or less, 30,000 or less, 10,000 or less, or 5,000 or less.

The fluorine-containing compound may have a melting point or a glass transition temperature (e.g., a melting point) of 0°C or higher, 20°C or higher, 30°C or higher, 35°C or higher, 40°C or higher, 45°C or higher, 50°C or higher, or 55°C or higher, and 200°C or lower, 150°C or lower, 100°C or lower, 80°C or lower, or 70°C or lower. The fluorine-containing compound has a melting point of usually 30°C or higher, preferably 40°C or higher, and for example, 75°C or higher.

The fluorine-containing compound is preferably a compound with carbon of biobased origin. A biobased content is measured in accordance with ASTM D6866. The biobased content of the fluorine-containing compound may be 20% or more, preferably 30% or more, more preferably 50% or more, further preferably 60% or more, further preferably 70% or more, and most preferably 80% or more or 90% or more, and for example, it is 100%. The high biobased content refers to less amount of fossil resource-based material used, which is represented by petroleum or the like, and from this perspective, it can be said that the higher the biobased content of the fluorine-containing compound, the more preferable it is.

The fluorine-containing compound in the present disclosure comprises R^{f1} or R^{f2} described above. Meanwhile, the fluorine-containing compound in the present disclosure may not have any one selected from the group consisting of a fluoroalkyl group having 8 or more carbon atoms, a perfluoroalkyl group having 8 or more carbon atoms, a fluoroalkyl group having 4 or more carbon atoms, a perfluoroalkyl group having 4 or more carbon atoms, a fluoroalkyl group having 2 or more carbon atoms and a perfluoroalkyl group having 2 or more carbon atoms. The fluorine-containing compound in the present disclosure can impart liquid-repellency without including these fluorine-containing groups to a substrate. As used herein, the fluoroalkyl group may mean an alkyl group in which one or more hydrogen atoms at the respective carbon atoms are substituted by a fluorine atom.

### {R^{f1} and R^{f2}}

The fluorine-containing compound has R^{f1} or R^{f2}, and for example, R^{f1}. In this regard, R^{f1} and R^{f2} do not constitute a moiety of a fluoroalkyl group having 2 or more carbon atoms. R^{f2} may not be a moiety of -CH₂-CF₂-CH₂-.

R^{f1} is -CF₃, -CF₂H or -CFH₂, and preferably -CF₃. The fluorine-containing compound may have an oxygen atom or a nitrogen atom in the position adjacent to R^{f1}.

R^{f2} is -CF₂- or -CFH-, and preferably -CF₂-. The fluorine-containing compound may have an oxygen atom or a nitrogen atom in at least one of the positions adjacent to R^{f2}.

### {(a) Active hydrogen-containing compound}

The fluorine-containing compound comprises a moiety derived from an active hydrogen-containing compound (a).

The compound (a) has an active hydrogen-containing group, and examples thereof include monofunctional, bifunctional or multifunctional alcohol, thiol and amine. Alcohol in the present disclosure means alcohol in a broad sense, and includes phenol.

It is preferable that the compound (a) has carbon derived from biomass. The biobased content is measured according to ASTM D6866. The fluorine-containing compound may have a biobased content of 20% or more, preferably 30% or more, more preferably 50% or more, even more preferably 60% or more, still more preferably 70% or more, and most preferably 80% or more or 90% or more, and for example, 100%. A high biobased content means that the amount of use of fossil resource materials, which are typically petroleum, is small, and a higher biobased content of the compound (a) is preferred from that point of view.

The compound (a) may comprise one or more of
a compound (a1) having R^{f1} or R^{f2};
an active hydrogen-containing compound (a2) comprising a hydrocarbon group having 6 or more and 40 or less carbon atoms; and
another active hydrogen-containing compound (a3).

### [Compound (a1)]

The compound (a1) has R^{f1} or R^{f2}. The compound (a1) may have a group represented by the formula: -Y^{f}-Z^{f}_{α} wherein, independently at each occurrence,
Y^{f} is a 1+α valent group composed of one or more selected from the group consisting of Y^{f1} and Y^{f2},
Y^{f1} is a group composed of one or more selected from a direct bond, -O-, -C(=O)-, -C(=NR')-, -S-, -S(=O)₂-, - NR'-, -C(OR')R'-, -C(OR') (-)₂ and -N(-)₂, wherein R' is a hydrogen atom or an organic group,
Y^{f2} is a group composed of one or more selected from the group consisting of an aliphatic group and an aromatic group,
Z^{f} is R^{f1}, or a hydrocarbon group having 2 or more and 40 or less carbon atoms and including R^{f1} or R^{f2}, and
α is 1 to 3.

R^{f1} may be, for example, included in Z^{f}. R^{f2} may be included in an organic group, Y^{f2}, Z^{f} or R^{f2}.

-H, -OH, -NH₂ or COOH may be bonded to the end of Y^{f} in -Y^{f}-Z^{f}_{α} to form an active hydrogen end. The compound (a1) may be represented by, for example, H-Y^{f}-Z^{f}_{α}

HO-Y^{f}-Z ^{f}_{α}

H₂N-Y^{f}-Z^{f}_{α}

HOOC-Y^{f}-Z^{f}_{α}. In the formula, H at the end is active hydrogen.

The structure of the compound (a1) is not limited to the structure, and Y^{f}-Z^{f}_{α} may constitute a moiety of any compound (a1).

### (Y^{f})

Y^{f} is a 1+α valent group composed of one or more selected from the group consisting of Y^{f1} and Y^{f2}.

Y^{f1} is a group composed of one or more selected from the group consisting of a direct bond, -O-, -C(=O)-, - C(=NR')-, -S-, -S(=O)₂-, -NR'-, -C(OR')R'-, -C(OR') (-)₂ and -N(-)₂, wherein R' is a hydrogen atom or a monovalent organic group, and
Y^{f2} is a group composed of one or more selected from the group consisting of an aliphatic group and an aromatic group.

Y^{f} may have a molecular weight of 10 or more, 50 or more, 100 or more, 200 or more, 300 or more, 500 or more, or 750 or more, and 3,000 or less, 2,500 or less, 2,000 or less, 1,500 or less, 1,000 or less, 750 or less, 500 or less, 300 or less, 200 or less, 100 or less, or 50 or less.

In the following, Y^{f1} and Y^{f2} will be described.

### ∘ Y^{f1}

Y^{f1} is a non-hydrocarbon linker.

Y^{f1} is a direct bond or a divalent or higher valent group. Y^{f1} may have a valence of 2 to 4, 2 or 3, or 2. It is preferable that Y^{f1} is not limited to direct bond.

Y^{f1} may have a molecular weight of 10 or more, 50 or more, 100 or more, 200 or more, 300 or more, or 500 or more, and 1,000 or less, 750 or less, 500 or less, 300 or less, 200 or less, 100 or less, or 50 or less.

Y^{f1} is a group composed of one or more selected from -O-, -C(=O)-, -S(=O)₂-, -NR'-, -C(OR')R'- and - C(OR')(-)₂, wherein R' is independently at each occurrence a hydrogen atom or a monovalent organic group.

R' is a hydrogen atom or a monovalent organic group. The organic group may be an aliphatic group having 1 to 30 carbon atoms (e.g., 1 to 20, 1 to 10, or 1 to 4 carbon atoms) or an aromatic group (e.g., a substituted or non-substituted alkyl group, a substituted or non-substituted benzyl group, or a substituted or non-substituted phenyl group). In the present description, the same applies to other R'.

Examples of Y^{f1} include a direct bond,

-O-,

-O-C(=O)-,

-O-C(=O)-O-,

-O-C(=O)-NR'-,

-NR'-,

-NR'-C(=O)-,

-NR'-C(=O)-O-,

-NR'-C(=O)-NR'-,

-C(=O)-,

-C(=O)-O-,

-C(=O)-NR'-,

-SO₂-,

-SO₂NR'-,

-C(OR')R'-, and

-C(OR')(-)₂,

wherein R' is independently at each occurrence a hydrogen atom or a monovalent organic group.

### ∘ Y^{f2}

Y^{f2} may be a group composed of one or more selected from the group consisting of an aliphatic group and an aromatic group.

Y^{f2} is a divalent or higher valent group. Y^{f2} may have a valence of 2 to 4, 2 or 3, or 2.

Y^{f2} may have 1 or more, 2 or more, 3 or more, 4 or more, 6 or more, 8 or more, 10 or more, 12 or more, 14 or more, 16 or more, or 18 or more carbon atoms, and 40 or less, 35 or less, 30 or less, 25 or less, 20 or less, 15 or less, 10 or less, or 5 or less carbon atoms.

Y^{f2} may have a molecular weight of 10 or more, 50 or more, 100 or more, 200 or more, 300 or more, or 500 or more, and 2,000 or less, 1,500 or less, 1,000 or less, 750 or less, 500 or less, 300 or less, 200 or less, 100 or less, or 50 or less.

Y^{f2} may be a hydrocarbon group or a non-hydrocarbon group (including a heteroatom). Y^{f2} may be aliphatic or aromatic. Y^{f2} may be linear, branched or cyclic.

Y^{f2} may be a hydrocarbon optionally having a substituent, a hydrocarbon aromatic ring optionally having a substituent, a heterocyclic linker optionally having a substituent, or a combination thereof. For example, Y^{f2} may be composed of one or more selected from a divalent to tetravalent aliphatic hydrocarbon group having 1 to 20 carbon atoms and optionally having a substituent, a divalent to tetravalent hydrocarbon aromatic ring optionally having a substituent, and a divalent to tetravalent heterocyclic ring optionally having a substituent.

The divalent to tetravalent aliphatic hydrocarbon group having 1 to 20 carbon atoms may be a cyclic, branched or linear hydrocarbon group. The divalent to tetravalent aliphatic hydrocarbon group having 1 to 20 carbon atoms may be a saturated or unsaturated (e.g., saturated) aliphatic hydrocarbon group. The aliphatic hydrocarbon group having 1 to 20 carbon atoms may have 1 or more, 2 or more, 3 or more, 4 or more, 6 or more, 8 or more, or 10 or more carbon atoms, and 15 or less, 10 or less, or 5 or less carbon atoms. The aliphatic hydrocarbon group may have a valence of 2 or more, 3 or more, or 4, and 4 or less, 3 or less, or 2.

The aliphatic hydrocarbon group may have a substituent. Examples of the substituents include, for example, -OR', -N(R')₂, -COOR', and a halogen atom, wherein R' is independently at each occurrence a monovalent organic group. The substituent may have or be free of active hydrogen. The number of substituent may be 6 or less, 5 or less, 4 or less, 3 or less, 2 or less, 1 or less, or 0. In the aliphatic hydrocarbon group having a substituent, the amount of carbon atom relative to the amount of carbon atom and heteroatom may be 70 mol% or more, 80 mol% or more, 90 mol% or more, 95 mol% or more, or 99 mol% or more, and is preferably be 75 mol% or more, and may be 95 mol% or less, 90 mol% or less, 85 mol% or less, or 80 mol% or less.

Examples of the divalent to tetravalent hydrocarbon aromatic ring include groups obtained by removing 2 to 4 hydrogen atoms from hydrocarbon aromatic rings such as benzene, naphthalene, anthracene, phenanthrene, tetracene (naphthacene), pentacene, pyrene, and coronene. The number of ring constituting atom of the hydrocarbon aromatic ring is 3 to 20, 4 to 16, or 5 to 12 and preferably 5 to 12. A valence of the hydrocarbon aromatic ring may be 2 or more, 3 or more, or 4, and may be 4 or less, 3 or less, or 2.

The hydrocarbon aromatic ring may have a substituent. Examples of substituents include -R', -OR', -N(R')₂, -COOR' and a halogen atom, wherein R' is independently at each occurrence a hydrogen atom or a monovalent organic group. The substituent may or may not have active hydrogen. The number of substituents may be 6 or less, 5 or less, 4 or less, 3 or less, 2 or less, 1 or less, or 0. In the hydrocarbon aromatic ring having a substituent, the amount of carbon atom relative to the carbon atom and the heteroatom may be 70 mol% or more, 80 mol% or more, 90 mol% or more, 95 mol% or more, or 99 mol% or more, and preferably 75 mol% or more, and may be 95 mol% or less, 90 mol% or less, 85 mol% or less, or 80 mol% or less.

The divalent to tetravalent heterocyclic ring may be an aliphatic group or an aromatic group. Examples of the divalent to tetravalent heterocyclic rings include groups obtained by removing 2 to 4 hydrogen atoms from pyridine, pyrazine, pyrimidine, pyridazine, triazine, quinoline, isoquinoline, quinazoline, cinnoline, phthalazine, quinoxaline, pyrrole, indole, furan, benzofuran, thiophene, benzothiophene, pyrazole, imidazole, benzimidazole, triazole, oxazole, benzoxazole, thiazole, benzothiazole, isothiazole, benzisothiazole, pyrrolidine, piperidine, piperazine, imidazolidine, thiazoline, and the like. The number of ring constituting atom of the heterocyclic ring is 3 to 20, 4 to 16, or 5 to 12 and preferably 5 to 12. A valence of the heterocyclic ring may be 2 or more, 3 or more, or 4, and may be 4 or less, 3 or less, or 2.

The heterocyclic ring may have a substituent. Examples of substituents include -R', -OR', -N(R')₂, - COOR' and a halogen atom, wherein R' is independently at each occurrence a hydrogen atom or a monovalent organic group. The substituent may or may not have active hydrogen. The number of substituents may be 6 or less, 5 or less, 4 or less, 3 or less, 2 or less, 1 or less, or 0. In the heterocyclic ring having a substituent, the amount of carbon atom relative to the carbon atom and the heteroatom may be 60 mol% or more, 70 mol% or more, 80 mol% or more, 90 mol% or more, 95 mol% or more, or 99 mol% or more, and for example 65 mol% or more, and may be 95 mol% or less, 90 mol% or less, 85 mol% or less, 80 mol% or less, or 70 mol% or less.

Examples of Y^{f2} include

-Ali-

-Cy-

-Ali(-)₂

-Cy(-)₂

(-)₂Ali-

(-)₂Cy-

(-)₂Ali(-)₂

(-)₂Cy(-)₂

-Ali-Cy-

-Cy-Ali-

-Cy-Ali-Cy-

-Ali-Cy-Ali-

wherein Ali is an aliphatic hydrocarbon group having 1 to 20 carbon atoms and Cy is a hydrocarbon aromatic ring or a heterocyclic ring.

Specific examples of Y^{f2} include:
-(CH₂)ₚ- (p is 1 to 20, for example, 1 to 10),
a linear hydrocarbon group having 1 to 40, for example, 1 to 10 carbon atoms and having an unsaturated bond,
a branched hydrocarbon group having 1 to 40, for example, 1 to 10 carbon atoms, and
-(CH₂)_{q}-Cy-(CH₂)ᵣ- (q and r are each independently 0 to 20, for example, 1 to 10, and Cy is a hydrocarbon aromatic ring or a heterocyclic ring).

### ∘ Examples of Y^{f}

Examples of Y^{f} will be described.

When Y^{f} is divalent, examples of Y^{f} include -Y^{f1}-, - Y^{f1}-Y^{f2}-, -Y^{f1}-Y^{f2}-Y^{f1}-, -Y^{f1}-Y^{f2}-Y^{f1}-Y^{f2}-, -Y^{f2}-, -Y^{f2}-Y^{f1}-, -Y^{f2}-Y^{f1}-Y^{f2}- and -Y²-Y^{f1}-Y^{f2}-Y^{f1}-. The group adjacent to Z^{f}_{α} may be Y^{f1}.

When Y^{f} is trivalent, examples of Y^{f} include -Y^{f1}(-)₂, -Y^{f1}-Y^{f2}(-)₂, -Y^{f1}-(Y^{f2}-)₂, -Y^{f1}-Y^{f2}-Y^{f1}(-)₂, -Y^{f1}-Y^{f2}(-Y^{f1}-)₂, - Y^{f1}-(Y^{f2}-Y^{f1}-)₂, -Y^{f1}-Y^{f2}-Y^{f1}-Y^{f2}(-)₂, -Y^{f1}-Y^{f2}-Y^{f1}-(Y^{f2}-)₂, -Y^{f1} -Y^{f2}-(Y^{f1}-Y^{f2}-)₂, -Y^{f1}-(Y^{f2}-Y^{f1}-Y^{f2}-)₂;
-Y^{f2}(-)₂, -Y^{f2}-Y^{f1}(-)₂, -Y^{f2}-(Y^{f1}-)₂, -Y^{f2}-Y^{f1}-Y^{f2}(-)₂, -Y^{f2}-Y^{f1}(-Y^{f2}-)₂, -Y^{f2}-(Y^{f1}-Y^{f2}-)₂, -Y^{f2}-Y^{f1}-Y^{f2}-Y^{f1}(-)₂, -Y^{f2}-Y^{f1}-Y^{f2}-(Y^{f1}-)₂, -Y^{f2}-Y^{f1}-(Y^{f2}-Y^{f1}-)₂, and -Y^{f2}-(Y^{f1}-Y^{f2}-Y^{f1}-)_{2.}

When Y^{f} is tetravalent, examples of Y^{f} include - Y^{f1}(-)₃, -Y^{f1}-Y^{f2}(-)₃, -Y^{f1}-Y^{f2}(-)₃, -Y^{f1}-Y^{f2}-Y^{f1}(-)₃,-Y^{f1}-Y^{f2}(-Y^{f1}-)₃, -Y^{f1}-(Y^{f2}-Y^{f1}-)₃, -Y^{f1}-Y^{f2}-Y^{f1}-Y^{f2}(-)₃, -Y^{f1}-Y^{f2}-Y^{f1} (Y^{f2}-)₃, -Y^{f1}-Y^{f2}-(Y^{f1}-Y^{f2}-)₃, -Y^{f1}-(Y^{f2}-Y^{f1}-Y^{f2}-)₃;
-Y^{f2}(-)₃, -Y^{f2}-Y^{f1}(-)₃, -Y^{f2}-Y^{f1}(-)₃, -Y^{f2}-Y^{f1}-Y^{f2}(-)₃, -Y^{f2}-Y^{f1}(-Y^{f2}-)₃, -Y^{f2}-(Y^{f1}-Y^{f2})₃, -Y^{f2}-Y^{f1}-Y^{f2}-Y^{f1}(-)₃, -Y^{f2}-Y^{f1}-Y^{f2}-(Y^{f1}-)₃, -Y^{f2}-Y^{f1}-(Y^{f2}-Y^{f1}-)₃, and -Y^{f2}-(Y^{f1}-Y^{f2}-Y^{f1}-)₃.

Preferred examples of Y^{f} include -Y^{f1}-, -Y^{f1}-Y^{f2}-, - Y^{f1}-Y^{f2}-Y^{f1}-, -Y^{f1}-Y^{f2}(-)₂, -Y^{f2}-, -Y^{f2}-Y^{f1}, -Y^{f2}-Y^{f1}-Y^{f2}- and -Y^{f2}-Y^{f1}(-) ₂.

### (Z^{f})

Z^{f} is R^{f1}, or a hydrocarbon group having 2 or more and 40 or less carbon atoms and including R^{f1} or R^{f2}. Z^{f} is, for example, R^{f1}. The hydrocarbon group including R^{f1} or R^{f2} may be an aromatic hydrocarbon group or an aliphatic hydrocarbon group, and is preferably an aliphatic hydrocarbon group, and in particular a saturated aliphatic hydrocarbon group (an alkyl group). The hydrocarbon group including R^{f1} or R^{f2} is branched or linear, and preferably linear. The hydrocarbon group including R^{f1} or R^{f2} may be saturated or unsaturated. It is preferable that the hydrocarbon group including R^{f1} or R^{f2} is a saturated aliphatic hydrocarbon group (alkyl group). The hydrocarbon group including R^{f1} or R^{f2} may have 2 or more, 4 or more, 6 or more, 8 or more, 10 or more, 12 or more, 14 or more, 16 or more, 18 or more, 20 or more, or 22 or more carbon atoms, preferably 10 or more, 12 or more, 14 or more, or 16 or more carbon atoms, and may have 40 or less, 35 or less, 30 or less, 25 or less, 20 or less, 15 or less, or 10 or less carbon atoms, and preferably 30 or less, 25 or less or 20 or less carbon atoms.

### (a)

α is 1 to 3, (1, 2 or 3) and for example, 1 or 2, or 1.

### (Examples of Compound (a1))

The compound (a1) may have a group represented by the formula:

-Y^{f11}-(Y^{f21}-Y^{f12})_{β}-Y^{f22}-Y^{f13}-Z^{f}

wherein, independently at each occurrence,
Y^{f11} is a direct bond, -O-, -NH- or -C(=O)-,
Y^{f21} is a group composed of one or more selected from the group consisting of an aliphatic group and an aromatic group,
Y^{f12} is a group composed of one or more selected from -O-, -C(=O)-, -C(=NR')-, -S-, -S(=O)₂-, -NR'- and - C(OR')R'-, wherein R' is a hydrogen atom or an organic group,
β is 0 to 3,
Y^{f22} is a group composed of one or more selected from the group consisting of an aliphatic group and an aromatic group,
Y^{f13} is -O-, -O-C(=O)-O-, -O-C(=O)-NR'-, -NR'-, -NR'-C(=O)-O-, -NR'-C(=O)-NR'-, -C(=O)-O-, -C(=O)-NR'- or - SO₂NR'-, wherein R' is a hydrogen atom or an organic group, and
Z^{f} is R^{f1}, or a hydrocarbon group having 2 or more and 40 or less carbon atoms and including R^{f1} or R^{f2}.

-H or -OH may be bonded to the end of Y^{f11} to form an active hydrogen end.

Y^{f11} may be a direct bond, -O-, -NH- or -C(=O)-.

Y^{f21} may be a group composed of one or more selected from the group consisting of an aliphatic group and an aromatic group. The same explanation about the above Y^{f2} may apply. Y^{f21}, however, is a divalent group.

Y^{f12} may be a group composed of one or more selected from -O-, -C(=O)-, -C(=NR')-, -S-, -S(=O)₂-, -NR'- and - C(OR')R'-. The same explanation about the above Y^{f1} may apply. Y^{f12}, however, is a divalent group.

β is 0 to 3 (0, 1, 2 or 3) and for example, 0 to 2, in particular 0 or 1.

Y^{f22} may be a group composed of one or more selected from the group consisting of an aliphatic group and an aromatic group. The same explanation about the above Y² may apply. Y^{f22}, however, is a divalent group. Y^{f22} may be a group represented by the formula:

-Y^{f221}-Y^{f222}-

wherein
Y^{f221} is a direct bond or a hydrocarbon group having 2 to 40 carbon atoms, and
Y^{f222} is a direct bond or a phenylene group. The hydrocarbon group may be an aromatic hydrocarbon group or an aliphatic hydrocarbon group, and may be an aliphatic hydrocarbon group, and in particular a saturated aliphatic hydrocarbon group (an alkyl group). The hydrocarbon group is branched or linear, and for example, linear. The hydrocarbon group may be saturated or unsaturated. The hydrocarbon group may be a saturated aliphatic hydrocarbon group (alkyl group). The hydrocarbon group may have 2 or more, 4 or more, 6 or more, 8 or more, 10 or more, 12 or more, 14 or more, 16 or more, 18 or more, 20 or more, or 22 or more carbon atoms, and 40 or less, 35 or less, 30 or less, 25 or less, 20 or less, 15 or less, or 10 or less carbon atoms.

Y^{f13} may be -O-, -O-C(=O)-O-, -O-C(=O)-NR'-, -NR'-, - NR'-C(=O)-O-, -NR'-C(=O)-NR'-, -C(=O)-O-, -C(=O)-NR'- or -SO₂NR'-, wherein R' is a hydrogen atom or a monovalent organic group. Y^{f13} is, for example, -O- or -NR'-.

Z^{f} is R^{f1}, or a hydrocarbon group having 2 or more and 40 or less carbon atoms and including R^{f1} or R^{f2} as described above. In particular, Z^{f} is R^{f1}.

In an embodiment, Y^{f22} may be a group represented by the formula:

-Y^{f221}-Y^{f222}-

wherein
Y^{f221} is a direct bond or a hydrocarbon group having 2 to 40 carbon atoms, and
Y^{f222} is a direct bond or a phenylene group.
Y^{f113} may be -O- or -NR'-, wherein R' is a hydrogen atom or a monovalent organic group. β may be 0 or 1. Z^{f} may be R^{f1}.

### (Specific examples of compound (a1))

Specific examples of compound (a1) are as follows.

| | |
|---|---|
| Hydroxy | HO-Y^{f}-Z^{f}_{α} |
| Carboxylic acid | HO(O=)C-Y^{f}-Z^{f}_{α} |
| Amine | H₂N-Y^{f}-Z^{f}_{α} |

wherein Y^{f}, Z^{f} and α are as described above, and G is a halogen atom (e.g., F, Cl, Br, or I).

In the above formula, the terminal functional groups (e.g., G(O=)C) adjacent to Y^{f}-Z^{f}_{α} are shown as being not included in -Y^{f}-, but part of the structure of the terminal functional groups (e.g., (O=)C) may be rewritten to be incorporated into Y^{f}.

Specific examples of compounds (a1) include a compound in which -Y^{f}-Z^{f}_{α} in the formula shown as the above examples is

-Ali-O-R^{f1},

-Ali-Cy-O-R^{f1},

-Ali-Cy-Ali-O-R^{f1},

-Cy-O-R^{f1},

-Cy-Ali-O-R^{f1}

-Cy-Ali-Cy-O-R^{f1},

-Ali-N-(R')-R^{f1},

-Ali-Cy-N(R')-R^{f1},

-Ali-Cy-Ali-N(R')-R^{f1},

-Cy-N (R')-R^{f1},

-Cy-Ali-N(R')-R^{f1},

-Cy-Ali-Cy-N(R')-R^{fl},

wherein Ali is an aliphatic hydrocarbon group having 1 to 20 carbon atoms, Cy is a hydrocarbon aromatic ring or a heterocyclic ring, R' is a hydrogen atom or an organic group, and R^{f1} is -CF₃, -CF₂H or -CFH₂.

Specific examples of compounds (a1) also include a compound in which -Yf-Z^{f}_{α} in the formula shown as the above examples is

- (CH₂)ₙ-O-R^{f1},

- (CH₂)ₙ-Cy-O-R^{f1},

- (CH₂)ₙ-Cy-(CH₂)ₙ-O-R^{f1},

-Cy-O-R^{f1},

-Cy-(CH₂)ₙ-O-R^{f1},

-Cy-(CH₂)ₙ-Cy-O-R^{f1},

-(CH₂)ₙ-N(R')-R^{f1},

-(CH₂)n-Cy-N (R')-R^{f1},

- (CH₂)ₙ-Cy-(CH₂)n-N (R')-R^{f1},

-Cy-N (R')-R^{f1},

-Cy- (CH₂)ₙ-N(R') -R^{f1},

-Cy- (CH₂)ₙ-Cy-N(R') -R^{f1},

wherein n is an integer of 1 to 40, Cy is a hydrocarbon aromatic ring or a heterocyclic ring, R' is a hydrogen atom or an organic group, R^{f1} is -CF₃, -CF₂H or -CFH₂.

More specific examples of compounds (a1) include:
trifluoromethoxyalkylcarboxylic acid,
trifluoromethoxyalkylcarboxylic acid halide,
trifluoromethoxybenzoic acid, trifluoromethoxy benzoic acid halide,
trifluoromethoxyphenylacetic acid, trifluoromethoxy phenylacetic acid halide,
trifluoromethoxy alkylamine,
trifluoromethoxy aniline,
trifluoromethoxy alkyl alcohol,
trifluoromethoxy phenol,

   CF₃-O-CF₂-R²-OH

   CF₃-O-R¹-O-CF₂-R²-OH

   CF₃-O-R¹-CF₂-O-R²-OH

   CF₃-O-Ph-O-CF₂-R²-OH

   CF₃-O-Ph-CF₂-O-R²-OH

   R³-O-CF₂-R²-OH

   R³-CF₂-O-R²-OH
wherein R¹ to R³ are independently a hydrocarbon group having 1 to 40 carbon atoms.

### [Examples of method for producing compound (a1)]

In this method, compound (111): HO-R³³³-CH=CH₂ having a hydroxyl group and olefin is used as a raw material to synthesize a trifluoromethoxy group-containing compound. R^{j33} is an alkylene group, for example, a C1-30 alkylene group.

Examples of olefin group-containing compounds include 3-hydroxypropene, 4-hydroxy-1-butene, 5-hydroxy-1-pentene, 6-hydroxy-1-hexene, 7-hydroxy-1-heptene, 8-hydroxy-1-octene, 9-hydroxy-1-nonene, 10-hydroxy-1-decane, 11-hydroxy-1-undecane, 12-hydroxy-1-dodecane, 13-hydroxy-1-tridecane, 14-hydroxy-1-tetradecane, 15-hydroxy-1-pentadecane, 16-hydroxy-1-hexadecane, 17-hydroxy-1-heptadecane, 18-hydroxy-1-octadecane, 19-hydroxy-1-nonadecane, 20-hydroxy-1-icosane, 21-hydroxy-1-henicosane, 24-hydroxy-1-tetracosane and 30-hydroxy-1-triacontane.

Carbon disulfide is allowed to react with the hydroxyl group of the compound (111) in the presence of, for example, sodium hydride, and iodomethane is added thereto to give xanthate ester (112): H₃CS-C(=S)-O-R^{j33}-COOR^{j32}. R^{j32} is a lower alkyl group such as a methyl group, an ethyl group, a propyl group, a butyl group or a tert-butyl group, and more specifically a methyl group or a tert-butyl group. Pyridine hydrogen fluoride and 1,3-dibromo-5,5-dimethyl hydantoin are allowed to react with the above xanthate ester (112) to give the target trifluoromethoxy group-containing compound (113): F₃COR^{j 33}-CH=CH₂

In another method, the hydroxyl group of the compound (111) is allowed to react with trifluoromethyl arylsulfonate in an aprotic polar solvent such as NMP, DMF or HMPA (hexamethylphosphoric triamide) in the presence of cesium fluoride and/or tetrabutylammonium bromide to give the target trifluoromethoxy group-containing compound (113): F₃CO-Rⱼ₃₃-CH=CH₂.

The resulting F₃CO-Rⱼ₃₃-CH=CH₂ may be formed into F₃CO-Rⱼ₃₃CH₂CH₂-OH by a usual method.

In this regard, another method for producing F₃CORⱼ₃₃CH₂CH₂-OH is a method described in, for example, WO2020/168011A1, in which F₃CO-Rⱼ₃₃CH₂CH₂-OH is synthesized by reacting silver triflate, potassium fluoride, 1-(chloromethyl)-4-fluoro-4-diazoniabicyclo[2.2.2]octane, a salt of tetrafluoroborate and benzyloxy alcohol (e.g., benzyloxy ethanol) and reducing the resultant (e.g., [2-(trifluoromethoxy)ethoxy]methyl]benzene) with hydrogen in the presence of a palladium catalyst.

### [Compound (a2)]

The compound (a2) is an active hydrogen-containing compound comprising a hydrocarbon group having 6 or more and 40 or less carbon atoms. The hydrocarbon group may be an aromatic hydrocarbon group or an aliphatic hydrocarbon group, and is preferably an aliphatic hydrocarbon group, and in particular a saturated aliphatic hydrocarbon group (an alkyl group). The hydrocarbon group is branched or linear, and preferably linear. The hydrocarbon group may be saturated or unsaturated. The hydrocarbon group is preferably a saturated aliphatic hydrocarbon group (alkyl group). The hydrocarbon group may have 6 or more, 8 or more, 10 or more, 12 or more, 14 or more, 16 or more, 18 or more, 20 or more, or 22 or more carbon atoms, preferably 10 or more, 12 or more, 14 or more, or 16 or more carbon atoms, and may have 40 or less, 35 or less, 30 or less, 25 or less, 20 or less, 15 or less, or 10 or less carbon atoms, and preferably 30 or less, 25 or less, or 20 or less carbon atoms.

### (Modified product of sugar alcohol/hydroxy acid)

The compound (a2) may be a modified product of sugar alcohol/hydroxy acid, which is sugar alcohol/hydroxy acid (sugar alcohol and/or hydroxy acid) in which a hydrocarbon group having 6 or more and 40 or less is modified. The type of sugar alcohol/hydroxy acid is not limited, and may be a cyclic or acyclic. Examples of sugar alcohols include monosaccharide, reducing sugar, amino sugar, aldonic acid and aldonolactone. Examples of hydroxy acids include hydroxy polyvalent carboxylic acid. Sugar alcohol/hydroxy acid may be a substance existing in a living body. Examples of sugar alcohols/ hydroxy acids include, but are not limited to, a compound derived from aldose and ketose, such as tetrose, pentose, hexose and heptose. Specific examples thereof include glucose, glyceraldehyde, erythrose, arabinose, ribose, arabinose, allose, altrose, mannose, xylose, lyxose, gulose, galactose, talose, fructose, ribulose, mannoheptulose, sedoheptulose, threose, erythritol, threitol, glucopyranose, mannopyranose, talopyranose, allopyranose, altropyranose, idopyranose, gulopyranose, glucitol, mannitol, erythritol, sorbitol, arabitol, xylitol, ribitol, galactitol, fucitol, iditol, inositol, pentaerythritol, dipentaerythritol, volemitol, gluconic acid, glyceric acid, xylonic acid, galactaric acid, ascorbic acid, citric acid, gluconolactone, glyceric acid lactone, xylonic acid lactone, glucosamine, galactosamine and a mixture thereof. Sugar alcohol/hydroxy acid may have 2 or more, 4 or more, or 6 or more, and 30 or less, 20 or less, or 10 or less carbon atoms. The compound (a2) has an average OH value of more than 0 to about 230, preferably about 10 to about 175, and most preferably about 25 to about 140.

The modified product of sugar alcohol/hydroxy acid may have 1 or more, 2 or more, 3 or more, 4 or more, or 5 or more, and 12 or less, 9 or less, 6 or less, or 3 or less hydrocarbon groups having 6 or more and 40 or less carbon atoms.

In the modified product of sugar alcohol/hydroxy acid, at least one active hydrogen (for example, hydrogen in the OH group and the carboxyl group) possessed by the sugar alcohol and/or hydroxy acid may be substituted by an active hydrogen-substituting group selected from -R^{a2}, -C(O)R^{a2}, -(CH₂CH₂O)ₙ(CH(CH₃)CH₂O)ₘR^{a2}, - (CH₂CH₂O)ₙ(CH (CH₃)CH₂O)ₘC(O)R^{a2} and a mixture thereof . R^{a2} is a hydrogen atom or a hydrocarbon group having 6 or more and 40 or less carbon atoms, n is each independently 0 to 20, m is each independently 0 to 20, and m+n may be more than 0. The compound (a2) has at least one active hydrogen. In the modified product of sugar alcohol/hydroxy acid, at least one (one or more) active hydrogens in sugar alcohol/ hydroxy acid may be unmodified. These active hydrogens, for example, an -OH group, may be allowed to react with the active hydrogen reactive group, in particular, an isocyanate group, in the compound (b) to form -NHCO-.

### (Modified product of sorbitan)

The modified product of sugar alcohol/hydroxy acid may be a modified product of sorbitan, which is sorbitan modified with a hydrocarbon group having 6 or more and 40 or less carbon atoms. The modified product of sorbitan may be alkyl sorbitan. The modified product of sorbitan may be a sorbitan modified with -R^{a2}, -C(O)_{R}a², - (CH₂CH₂O)ₙ(CH(CH₃)CH₂O)ₘR^{a2}, -(CH₂CH₂O)ₙ(CH(CH₃)CH₂₀)ₘC(O)R^{a2} or a mixture thereof, wherein R^{a2} is a hydrocarbon group having 6 or more and 40 ore less carbon atoms. The modified product of sorbitan may be, for example, sorbitan monosubstituted, disubstituted, or trisubstituted with -C(O)R^{a2}. Sorbitan may include sorbitol, isosorbide, or other intermediate products or by-products thereof. A commercially available sorbitan such as SPAN may be used as the above alkyl sorbitan.

In an embodiment, at least one active hydrogen-substituting group may be -C(O)R^{a2}, and R^{a2} may be a linear branched alkyl group having 6 to 40, more preferably 7 to 21, and most preferably 11 to 21 carbon atoms. Preferred compounds include a monosubstituted, disubstituted, or trisubstituted sorbitan derived from caprylic acid, capric acid, lauric acid, myristic acid, palmitic acid, stearic acid, arachidic acid, behenic acid, lignoceric acid and a mixture thereof. More preferred compounds include monosubstituted, disubstituted or trisubstituted sorbitan stearate and sorbitan behenin.

In an embodiment, R^{a2} may have at least one unsaturated bond. Examples of such compounds (in which at least one active hydrogen-substituting group is selected from -C(O)Ra² and R^{a2} has at least one unsaturated bond) include, but are not limited to, sorbitan trioleate (i.e., in which R^{a2} is - C₇H₁₄CH=CHC₈H₁₇). Other examples include, but are not limited to, a monosubstituted, disubstituted or trisubstituted sorbitan derived from palmitoleic acid, linoleic acid, arachidonic acid and erucic acid.

In an embodiment, the modified product of sorbitan has at least one active hydrogen-substituting group. The active hydrogen-substituting group may be independently - (CH₂CH₂O)ₙ(CH(CH₃)CH₂O)ₘR^{a2} or-(CH₂CH₂O)ₙ(CH (CH₃)CH₂O)ₘC(O)R^{a2}, wherein m is each independently 0 to 20, n is each independently 0 to 20, and m+n is more than 0. This compound is known as polysorbate and sold under the tradename TWEEN. Those sorbitans may be monosubstituted, disubstituted or trisubstituted by R^{a2}. Commercially available polysorbates are known to include a wide variety of compounds such as polysorbate in which each R² is H (non-substituted) and polysorbate in which each R^{a2} is a linear or branched alkyl group having 6 to 40 carbon atoms (fully substituted), and a mixture of those substituted compounds. Examples of such modified products of sorbitan include polysorbate such as polysorbate tristearate and polysorbate monostearate. Examples of modified products of sorbitan in which m+n is more than 0 and R^{a2} has at least one unsaturated bond include, but are not limited to, polysorbate trioleate (in which R^{a2} is C₇H₁₄CH=CHC₈H₁₇) which is sold under the name polysorbate 80. Furthermore, the modified product of sorbitan may include a mixture of compounds having various active hydrogen substituting groups, and may also include a mixture of a compound in which R^{a2} has at least one unsaturated bond and a compound in which R^{a2} is fully saturated.

### (Modified product of citric acid)

The modified product of sugar alcohol/hydroxy acid may be a modified product of citric acid, which is citric acid modified with a hydrocarbon group having 6 or more and 40 or less carbon atoms. The modified product of citric acid may be alkyl citrate. The modified product of citric acid may be in the form of, for example, a monosubstituted, disubstituted or trisubstituted citric acid having an alkyl group. A mixture of citrates which have a certain number of active hydrogen substituting groups may be used. Furthermore, the modified product of citric acid may include a mixture of a compound comprising a hydrocarbon group having R^{a2} with at least one unsaturated bond and a compound in which R^{a2} is a fully saturated hydrocarbon. The modified product of citric acid may have an active hydrogen substituting group selected from - (CH₂CH₂O)ₙ(CH(CH₃)CH₂O)ₘR^{a2} and - (CH₂CH₂O)ₙ(CH (CH₃)CH₂O)ₘC(O)R^{a2}, wherein R^{a2} is a hydrocarbon group having 6 or more and 40 or less carbon atoms. Examples of modified products of citric acid include, but are not limited to, trialkylcitrate.

### (Pentaerythritol)

The modified product of sugar alcohol/hydroxy acid may be a modified product of pentaerythritol, which is pentaerythritol modified with a hydrocarbon group having 6 or more and 40 or less carbon atoms. The modified product of pentaerythritol may be a monosubstituted, disubstituted or trisubstituted pentaerythritol comprising a hydrocarbon group having 6 or more and 40 or less carbon atoms, in particular, an alkyl group. The modified product of pentaerythritol, for example, is dipentaerythritol ester. In the formula, the active hydrogen substituting group may include -CH₂C[CH₂OR^{a2}]₃, wherein R^{a2} is a hydrocarbon group having 6 or more and 40 or less carbon atoms. Furthermore, the modified product of pentaerythritol may include a mixture of a compound with a different chain length of hydrocarbons or a mixture of a compound in which R^{a2} has at least one unsaturated bond and a compound in which R^{a2} is fully saturated.

### R^{a2}

### [Compound (a3)]

The compound (a) may comprise another active hydrogen-containing compound (a3).

### (Compound (a31))

The compound (a3) may be a compound represented by the formula: R^{a31}-X^{a31}
wherein
R³¹ is a C₁ to C₃₀ linear or branched alkyl optionally having at least one unsaturated group, a hydroxy functional C₁ to C₃₀ linear or branched alkyl, hydroxy functional linear or branched C₁ to C₃₀ polyether, hydroxy functional linear or branched polyester, hydroxy functional linear or branched organosiloxane, thiol functional C₁ to C₃₀ linear or branched alkyl, amine functional C₁ to C₃₀ linear or branched alkyl, Y-R^{a311}R^{a312}R^{a313}N⁺-R^{a314}-, wherein Y is a halide ion such as Cl⁻, HOS(=O)₂-R^{a314}-, or R^{a311}R^{a312}C=N-, wherein R^{a311}, R^{a312}, R^{a313} are each independently -H or C₁ to C₆ alkyl and R^{a314} is a divalent alkyl group having 1 to 20 carbon atoms,
X^{a31} is a isocyanate reactive functional group such as -OH, -C(O)OH, -SH, -NH(R'), -O-(CH₂CH₂O)₃(CH(CH₃)CH₂O)ₜ-H or -C(O)-O-(CH₂CH₂O)ₛ(CH(CH₃)CH₂O)ₜ-H, wherein R' is -H or a monovalent organic group, s is an integer of 0 to 50, t represents an integer of 0 to 50 and s+t is more than 0.

The compound (a31) may be a hydrophilic watersoluble material having at least one hydroxy terminated polyether. In the formula, X^{a31} is -O-(CH₂CH₂O)ₛ(CH(CH₃)CH₂O)ₜ-H or -C(O)-O-(CH₂CH₂O)ₛ (CH (CH₃)CH₂O)t-H. -(CH₂CH₂O)- represents an oxyethylene group (EO) and -(CH(CH₃)CH₂O)- represent an oxypropylene group (PO). These polyethers may include only the EO group, only the PO group or a mixture thereof. These polyethers may be in the form of a specified PEG-PPG-PEG (polyethylene glycol-polypropylene glycol-polyethylene glycol) triblock copolymer.

In an embodiment, X^{a31} is -OH, -C(O)OH, -SH or - NH(R'). R^{a31} is selected from a C₁ to C₃₀ linear or branched alkyl optionally having at least one unsaturated group, a hydroxy functional C₁ to C₃₀ linear or branched alkyl, a hydroxy functional linear or branched C₁ to C₃₀ polyether, a hydroxy functional linear or branched polyester, hydroxy or amine functional linear or branched organosiloxane, thiol functional C₁ to C₃₀ linear or branched alkyl, and an amine functional C₁ to C₃₀ linear or branched alkyl.

X^{a31} may be -OH, and examples of such compounds (a31) include, but are not limited to, an alkyl alcohol such as propanol and butanol, aliphatic alcohol including stearyl alcohol (in which R^{a31} is a C₁ to C₃₀ linear or branched alkyl optionally having at least one unsaturated group), alkyldiol such as ethanediol, propanediol, butanediol and hexanediol or polyol (in which R^{a31} is a hydroxy functional C₁ to C₃₀ linear or branched alkyl), alkylene glycol ether such as triethylene glycol, tetraethylene glycol, poly(ethylene glycol) (PEG), poly(propylene glycol) (PPG) and poly(tetrahydrofuran), glycol ether containing a mixture of PEG, PPG or THF units (in which R^{a31} is hydroxy functional linear or branched C₁ to C₃₀ polyether), polyester polyol (in which R^{a31} is hydroxy functional linear or branched polyester), silicone prepolymer polyol (in which R^{a31} is hydroxy functional linear or branched organosiloxane), N,N-dimethylaminoethanol (in which R^{a31} is amine functional C₁ to C₃₀ linear or branched alkyl), choline chloride or betaine HCl (in which R^{a31} is Y-R^{a311}R^{a312}R^{a313}N⁺-R^{a314}-) and butanone oxime (in which R^{a31} is R^{a311}Ra³¹²C=N-). Polyether polyol may include only the EO group, only the PO group, only the THF group, or a mixture thereof. These polyethers may be in the form of a block copolymer which is specified with PEG-PPG-PEG (polyethylene glycol-polypropylene glycol-polyethylene glycol). Polyether glycol has an average molecular weight of preferably about 200 or more, and most preferably 350 to 2,000.

X^{a31} may be -C(O)OH, and examples of such compounds (a31) include, but are not limited to, fatty acid such as caprylic acid, capric acid, lauric acid, myristic acid, palmitic acid, stearic acid, arachidic acid, behenic acid, lignoceric acid, palmitoleic acid, linoleic acid, arachidonic acid, oleic acid and erucic aid (in which R^{a31} is C₁ to C₃₀ linear or branched alkyl optionally having at least one unsaturated group), hydroxy-containing acid such as hydroxycaprylic acid, hydroxycapric acid, hydroxylauric acid, hydroxymyristic acid, hydroxypalmitic acid, hydroxystearic acid, hydroxyarachidic acid, hydroxybehenic acid, hydroxylignoceric acid, hydroxypalmitoleic acid, hydroxylinoleic acid, hydroxyarachidonic acid, hydroxyoleic acid and hydroxyerucic acid (in which R^{a31} is hydroxy functional C₁ to C₃₀ linear or branched alkyl), and mercaptoalkanoic acid such as mercaptopropionic acid (in which R^{a31} is thiol functional C₁ to C₃₀ linear or branched alkyl).

X^{a31} may be -SH, and examples of such compounds (a31) include, but are not limited to, alkylthiol such as lauryl mercaptan and dodecyl mercaptan (in which R^{a31} is C₁ to C₃₀ linear or branched alkyl optionally having at least one unsaturated group).

X^{a31} may be -NH(R'), and examples of such compounds (a31) include, but are not limited to, alkylamine such as diisopropylamine, propylamine, hexylamine and laurylamine (in which R^{a31} is C₁ to C₃₀ linear or branched alkyl optionally having at least one unsaturated group), alkanol amine such as ethanolamine and propanolamine (in which R^{a31} is a hydroxy functional C₁ to C₃₀ linear or branched alkyl), silicone prepolymer polyamine (in which R^{a31} is amine functional linear or branched organosiloxane), alkyldiamine (in which R^{a31} is an amine functional C₁ to C₃₀ linear or branched alkyl), and aminoalkanesulfonic acid such as 2-aminoethanesulfonic acid (in which R^{a31} is HO-S(O)₂R³¹⁴-).

### (Compound (a32))

The compound (a32) may be a compound represented by the formula: Ra³²¹-(OCH₂CH(OR^{a322})CH₂)_{z}-OR^{a323}, wherein at least one of R^{a321}, R^{a322} and R^{a323} is -H, and R^{a321}, R^{a322} and R^{a323} are each independently -H, -R^{a324} or - C(O)R^{a324}, R^{a324} is independently a linear or branched alkyl group having 5 to 29 carbon atoms and optionally having at least one unsaturated bond, and z is 1 to 15.

The compound (a32) may be a compound commonly referred to as polyglycerol. Specific examples thereof include, but are not limited to, triglycerol monostearate, triglycerol distearate, hexaglycerol monostearate, hexaglycerol distearate, decaglycerol mono(caprylate/caprate), decaglycerol di(caprylate/caprate), decaglycerol, polyglycerol-3 and C18 diglyceride.

### (Chain extender)

The compound (a3) may be a chain extender. The chain extender has two or more, for example two, functional groups having active hydrogen in the molecule. The chain extender may be a known chain extender. Examples thereof include an aliphatic or aromatic diol or polyol such as ethylene glycol, diethylene glycol, triethylene glycol, propylene glycol, dipropylene glycol, tripropylene glycol, 1,4-butanediol, 1,6-hexanediol and cyclohexanedimethanol; an aliphatic or aromatic diamine or polyamine such as ethylenediamine, piperazine, aminoethylpiperazine, phenylenediamine and diethyltoluenediamine; a phenol hydroxyl group-containing compound such as resorcinol, catechol, hydroquinone, bisphenol, bisphenol A, bisphenol AP (1,1-bis(4-hydroxylphenyl)-1-phenylethane), bisphenol F, bisphenol K, bisphenol M, tetramethylbiphenol and o,o'-diallylbisphenol A; and alcohol amine such as aminoethylethanolamine, aminopropylethanolamine, aminohexylethanolamine, aminoethylpropanolamine, aminopropylpropanolamine and aminohexylpropanolamine.

### {(b) Active hydrogen reactive compound}

The fluorine-containing compound comprises a moiety derived from an active hydrogen reactive compound (b).

The active hydrogen reactive compound (b) has an active hydrogen reactive group. Examples of active hydrogen reactive groups include an epoxy group, an isocyanate group, a thioisocyanate group, a carbodiimide group, an acid halide group and a maleic anhydride group. The active hydrogen reactive group is typically an isocyanate group. The active hydrogen reactive compound (b) is typically polyisocyanate, and may be diisocyanate, triisocyanate or polyvalent isocyanate, and may be aliphatic or aromatic.

Examples of compounds (b) include a compound selected from: an aromatic polyisocyanate selected from tolylene diisocyanate (2,4- or 2,6-tolylene diisocyanate or a mixture thereof) (TDI), phenylene diisocyanate (m-, p-phenylene diisocyanate or a mixture thereof, 4,4'-diphenyl diisocyanate, diphenylmethane diisocyanate (4,4'-, 2,4 or 2,2'-diphenylmethane diisocyanate or a mixture thereof) (MDI), 4,4'-toluidine isocyanate (TODI), 4,4'-diphenyl ether diisocyanate, xylylene diisocyanate (1,3- or 1,4-xylylene diisocyanate or a mixture thereof) (XDI), tetramethyl xylylene diisocyanate (1,3- or 1,4-tetramethylxylylene diisocyanate or a mixture thereof) (TMXDI), ω,ω'-diisocyanate-1,4-diethylbenzene, naphthalene diisocyanate (1,5-, 1,4- or 1,8-naphthalene diisocyanate or a mixture thereof) (NDI), triphenylmethane triisocyanate, tris(isocyanate phenyl)thiophosphate, polymethylene polyphenylene polyisocyanate, nitrodiphenyl-4,4'-diisocyanate, 3,3'-dimethyldiphenylmethane-4,4'-diisocyanate, 4,4'-diphenylpropane diisocyanate and 3,3'-dimethoxydiphenyl-4,4'-diisocyanate;
an acyclic aliphatic polyisocyanate selected from trimethylene diisocyanate, 1,2-propylene diisocyanate, butylene diisocyanate (tetramethylene diisocyanate, 1,2-butylene diisocyanate, 2,3-butylene diisocyanate, 1,3-butylene diisocyanate), hexamethylene diisocyanate, pentamethylene diisocyanate, 2,2,4-trimethylhexamethylene diisocyanate, 2,4,4-trimethylhexamethylene diisocyanate, 2,6-diisocyanatomethylcaproate, lysine diisocyanate, lysine ester triisocyanate, 1,6,11-undecane triisocyanate, 1,3,6-hexamethylene triisocyanate, trimethylhexamethylene diisocyanate and decamethylene diisocyanate;
an alicyclic polyisocyanate selected from 1,3-cyclopentane diisocyanate, 1,3-cyclopentene diisocyanate, cyclohexane diisocyanate (1,4-cyclohexane diisocyanate, 1,3-cyclohexane diisocyanate), 3-isocyanatomethyl-3,5,5-trimethylcyclohexyl isocyanate (isophorone diisocyanate, IPDI), methylene bis(cyclohexyl isocyanate (4,4'-, 2,4'- or 2,2'-methylene bis(cyclohexyl isocyanate or a mixture thereof) (hydrogenated MDI), methylcyclohexane diisocyanate (methyl-2,4-cyclohexane diisocyanate, methyl-2,6-cyclohexane diisocyanate, bis(isocyanatomethyl)cyclohexane (1,3- or 1,4-bis(isocyanatomethyl)cyclohexane or a mixture thereof) (hydrogenated XDI), dimer acid diisocyanate, transcyclohexane 1,4-diisocyanate, hydrogenated tolylene diisocyanate (hydrogenated TDI) and hydrogenated tetramethylxylylene diisocyanate (hydrogenated TMXDI);
a bridged alicyclic polyisocyanate selected from norbornene diisocyanate, norbornane diisocyanatomethyl, bicycloheptane triisocyanate, diisocyanatomethyl bicycloheptane and di(diisocyanatomethyl)tricyclodecane; 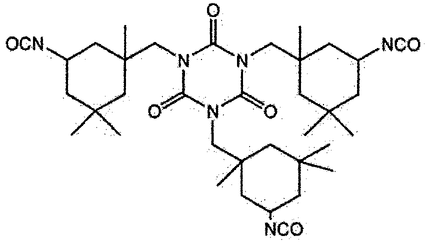 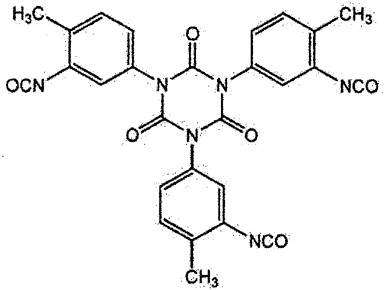 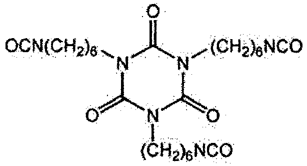 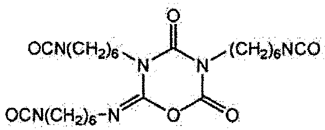 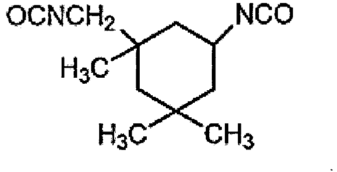 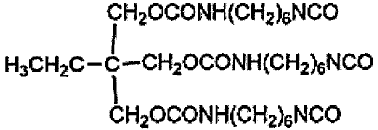 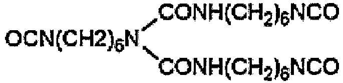 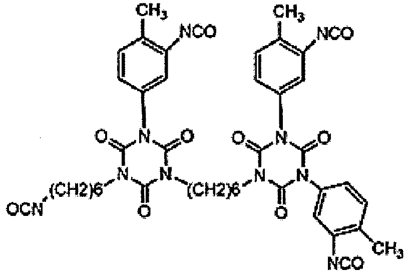 and
a compound selected from a multimer (dimer, trimer, pentamer, heptamer, uretidinedione, uretonimine, isocyanurate modified product and polycarbodiimide), a biuret modified product and other derivatives of the above.

### { (b1) Compound}

The compound (b) may comprise a compound (b1) having R^{f1} or R^{f2}.

The compound (b1) having R^{f1} or R^{f2} may have a group represented by the formula:

-Y^{f}-Z^{f}_{α}

wherein, independently at each occurrence,
Y^{f} is a 1+α valent group composed of one or more selected from the group consisting of Y^{f1} and Y^{f2},
Y^{f1} is a group composed of one or more selected from a direct bond, -O-, -C(=O)-, -C(=NR')-, -S-, -S(=O)₂-, - NR'-, -C(OR')R'-, -C(OR') (-)₂ and -N(-)₂, wherein R' is a hydrogen atom or an organic group,
Y^{f2} is a group composed of one or more selected from the group consisting of an aliphatic group and an aromatic group,
Z^{f} is R^{f1}, or a hydrocarbon group having 2 or more and 40 or less carbon atoms and including R^{f1} or R^{f2}, and
α is 1 to 3.

R^{f1} may be, for example, included in Z^{f}. R^{f2} may be included in an organic group, Y^{f2}, Z^{f} or R^{f2}.

The explanation about -Y^{f}-Z^{f}_{α} possessed by the compound (a1) is referred to for the explanation about - Y^{f}-Z^{f}_{α} possessed by the compound (b1).

However, an active hydrogen-reactive group such as acid halide, acid anhydride, isocyanate and epoxy may be formed at the end of Y^{f} of the compound (b1). For example, the compound (b1) may also be represented by the formula:

X^{f}-Y^{f}-Z^{f}_{α}

In the formula, X^{f} is a group which forms an active hydrogen reactive group, and in particular, is an isocyanate group. The structure of the compound (b1) is not limited to this structure, and Y^{f}-Z^{f}_{α} may constitute any moiety of the compound (b1).

### (Specific examples of compound (b1))

Specific examples of compound (b1), which are not limited, are as follows. The compound (b1) may be isocyanate.

Specific examples of compound (b1) are as follows:

| | |
|---|---|
| carboxylic acid | HO(O=)C-Y^{f}-Z^{f}_{α} |
| acid halide | G(O=)C-Y^{f}-Z^{f}_{α} |
| acid anhydride | O (C (=O) -Y^{f}-Z^{f}_{α})₂ |
| isocyanate | O=C=N-Y^{f}-Z^{f}_{α} |
| thioisocyanate | S=C=N-Y^{f}-Z^{f}_{α} |
| epoxy | (CH₂OCH)CH₂O-Y^{f}-Z^{f}_{α} |
| halide | G-Y^{f}-Z^{f}_{α} |

wherein Y^{f}, Z^{f} and α are as described above, and G is a halogen atom (e.g., F, Cl, Br, or I).

In the above formula, the terminal functional groups (e.g., G(O=)C) adjacent to Y^{f}-Z^{f}_{α} are shown as being not included in -Y^{f}-, but part of the structure of the terminal functional groups (e.g., (O=)C) may be rewritten to be incorporated into Y^{f}.

Specific examples of compounds (b1) include a compound in which -Y^{f}-Z^{f}_{α} in the formula shown as the above examples is -Ali-O-R^{f1},

-Ali-Cy-O-R^{f1},

-Ali-Cy-Ali-O-R^{f1},

-Cy-O-R^{f1},

-Cy-Ali-O-R^{f1},

-Cy-Ali-Cy-O-R^{f1},

-Ali-N(R')-R^{f1},

-Ali-Cy-N(R')-R^{f1},

-Ali-Cy-Ali-N(R')-R^{f1},

-Cy-N(R')-R^{f1},

-Cy-Ali-N(R')-R^{f1},

-Cy-Ali-Cy-N(R')-R^{f1},

wherein Ali is an aliphatic hydrocarbon group having 1 to 20 carbon atoms, Cy is a hydrocarbon aromatic ring or a heterocyclic ring, R' is a hydrogen atom or an organic group, and R^{f1} is -CF₃, -CF₂H or -CFH₂.

Specific examples of compounds (b1) include a compound in which -Y^{f}-Z^{f}_{α} in the formula shown as the above examples is -(CH₂)ₙ-O-R^{f1},

-(CH₂)ₙ-Cy-O-R^{f1},

- (CH₂)ₙ-Cy-(CH₂)ₙ-O-R^{f1},

-Cy-O-R^{f1},

-Cy-(CH₂)ₙ-O-R^{f1},

-Cy-(CH₂)ₙ-Cy-O-R^{f1},

-(CH₂)ₙ-N(R')-R^{f1},

-(CH₂)ₙ-Cy-N(R')-R^{f1},

-(CH₂)ₙ-Cy-(CH₂)ₙ-N(R')-R^{f1},

-Cy-N(R')-R^{f1},

-Cy-(CH₂)ₙ-N(R')-R^{f1},

-Cy-(CH₂)ₙ-Cy-N(R')-R^{f1},

wherein n is an integer of 1 to 40, Cy is a hydrocarbon aromatic ring or a heterocyclic ring, R' is a hydrogen atom or an organic group, R^{f1} is -CF₃, -CF₂H or -CFH₂.

More specific examples of compounds (b1) include:
trifluoromethoxyalkylcarboxylic acid,
trifluoromethoxyalkylcarboxylic acid halide,
trifluoromethoxybenzoic acid, trifluoromethoxy benzoic acid halide,
trifluoromethoxyphenylacetic acid, trifluoromethoxy phenylacetic acid halide,
trifluoromethoxy alkyl isocyanate and F₃CO-Ph-NCO.

### {-NHCO-}

The fluorine-containing compound comprises -NHCO-derived from the compound (a) and the compound (b). - NHCO- is formed by the reaction between the active hydrogen-containing group (typically a hydroxyl group) that the compound (a) has and the active hydrogen reactive group (typically an isocyanate group) that the compound (b) has. The fluorine-containing compound is typically polyurethane.

### {Composition of fluorine-containing compound}

The amount of the moiety derived from the compound (a) may be 10% by weight or more, 20% by weight or more, 30% by weight or more, 40% by weight or more, 50% by weight or more, 60% by weight or more, or 70% by weight or more, and 75% by weight or less, 65% by weight or less, 55% by weight or less, 45% by weight or less, 35% by weight or less, 25% by weight or less, or 15% by weight or less relative to the fluorine-containing compound.

The amount of the moiety derived from the compound (a1) may be 10% by weight or more, 20% by weight or more, 30% by weight or more, 40% by weight or more, 50% by weight or more, 60% by weight or more, or 70% by weight or more, and 75% by weight or less, 65% by weight or less, 55% by weight or less, 45% by weight or less, 35% by weight or less, 25% by weight or less, or 15% by weight or less relative to the moiety derived from the compound (a).

The amount of the moiety derived from the compound (a2) may be 10% by weight or more, 20% by weight or more, 30% by weight or more, 40% by weight or more, 50% by weight or more, 60% by weight or more, or 70% by weight or more, and 75% by weight or less, 65% by weight or less, 55% by weight or less, 45% by weight or less, 35% by weight or less, 25% by weight or less, or 15% by weight or less relative to the moiety derived from the compound (a).

The amount of the moiety derived from the compound (a3) may be 10% by weight or more, 20% by weight or more, 30% by weight or more, 40% by weight or more, 50% by weight or more, 60% by weight or more, or 70% by weight or more, and 75% by weight or less, 65% by weight or less, 55% by weight or less, 45% by weight or less, 35% by weight or less, 25% by weight or less, or 15% by weight or less relative to the moiety derived from the compound (a).

The amount of the moiety derived from the compound (a31) may be 10% by weight or more, 20% by weight or more, 30% by weight or more, 40% by weight or more, 50% by weight or more, 60% by weight or more, or 70% by weight or more, and 75% by weight or less, 65% by weight or less, 55% by weight or less, 45% by weight or less, 35% by weight or less, 25% by weight or less, or 15% by weight or less relative to the moiety derived from the compound (a).

The amount of the moiety derived from the compound (a32) may be 10% by weight or more, 20% by weight or more, 30% by weight or more, 40% by weight or more, 50% by weight or more, 60% by weight or more, or 70% by weight or more, and 75% by weight or less, 65% by weight or less, 55% by weight or less, 45% by weight or less, 35% by weight or less, 25% by weight or less, or 15% by weight or less relative to the moiety derived from the compound (a).

The amount of the moiety derived from the chain extender may be 10% by weight or more, 20% by weight or more, 30% by weight or more, 40% by weight or more, 50% by weight or more, 60% by weight or more, or 70% by weight or more, and 75% by weight or less, 65% by weight or less, 55% by weight or less, 45% by weight or less, 35% by weight or less, 25% by weight or less, or 15% by weight or less relative to the moiety derived from the compound (a).

The amount of the moiety derived from the compound (b) may be 10% by weight or more, 20% by weight or more, 30% by weight or more, 40% by weight or more, 50% by weight or more, 60% by weight or more, or 70% by weight or more, and 75% by weight or less, 65% by weight or less, 55% by weight or less, 45% by weight or less, 35% by weight or less, 25% by weight or less, or 15% by weight or less relative to the fluorine-containing compound.

The amount of the moiety derived from the compound (b1) may be 10% by weight or more, 20% by weight or more, 30% by weight or more, 40% by weight or more, 50% by weight or more, 60% by weight or more, or 70% by weight or more, and 75% by weight or less, 65% by weight or less, 55% by weight or less, 45% by weight or less, 35% by weight or less, 25% by weight or less, or 15% by weight or less relative to the moiety derived from the compound (b).

### {Method for producing fluorine-containing compound}

The fluorine-containing compound may be produced by reacting the compound (a) and the compound (b). The reaction may be performed in a single step or sequentially in multiple steps. For example, when unreacted active hydrogen groups or active hydrogen reactive groups are present in the product, synthesis may be sequentially performed. Sequential reaction is useful when substituted sugar alcohol having a large number of OH groups is used. The reaction conditions are not limited and may be suitably determined by those skilled in the art. More specifically, the compound (a) and the compound (b) may be mixed so that the equivalent ratio of the active hydrogen reactive group (an isocyanate group) to the active hydrogen group (active hydrogen reactive group/ active hydrogen group) is 1.2 or more, preferably 1.5 or more, and for example, 2.0 or less.

### <Water- and oil- repellent agent>

The water- and oil-repellent agent in the present disclosure imparts liquid-repellency (water-repellency, oil-repellency, oil resistance and/or water resistance) to a substrate (e.g., fiber substrate, paper substrate), and may function as at least one selected from a water-repellent agent, an oil-repellent agent, an oil-resistant agent and a water-resistant agent. The water- and oil-repellent agent in the present disclosure can impart good oil resistance (oil-repellency) and/or water resistance (water-repellency) to a substrate (e.g., fiber substrate, paper substrate), and for example, can impart both oil resistance and water resistance to a substrate.

### {Fluorine-containing compound}

The water- and oil-repellent agent of present disclosure comprises the fluorine-containing compound described above. The fluorine-containing compound itself may be used as a water- and oil-repellent agent, or may be used as a water- and oil-repellent agent in combination with other components described below.

The water- and oil-repellent agent in the present disclosure comprises the fluorine-containing-compound having R^{f1} or R^{f2} described above. Meanwhile, the water- and oil-repellent agent in the present disclosure may not have any one selected from the group consisting of a compound having a fluoroalkyl group having 8 or more carbon atoms, a compound having a perfluoroalkyl group having 8 or more carbon atoms, a compound having a fluoroalkyl group having 4 or more carbon atoms, a compound having a perfluoroalkyl group having 4 or more carbon atoms, a compound having a fluoroalkyl group having 2 or more carbon atoms and a compound having a perfluoroalkyl group having 2 or more carbon atoms. The water- and oil-repellent agent in the present disclosure can impart liquid-repellency to a substrate without including the above fluorine compounds. As used herein, the fluoroalkyl group may mean an alkyl group in which one or more hydrogen atoms at the respective carbon atoms are substituted by a fluorine atom.

### [Amount of fluorine-containing compound]

The amount of the fluorine-containing compound may be 0.01% by weight or more, 0.03% by weight or more, 0.5% by weight or more, 1% by weight or more, 3% by weight or more, 5% by weight or more, 10% by weight or more, 20% by weight or more, 30% by weight or more, and 60% by weight or less, 50% by weight or less, 40% by weight or less, 30% by weight or less, 20% by weight or less, 10% by weight or less, 5% by weight or less, or 3% by weight or less in the water- and oil-repellent agent. The fluorine-containing compound itself may be used as a water- and oil-repellent agent.

### {Other water- and oil- repellent components}

The water- and oil-repellent agent of present disclosure may comprise other water- and oil-repellent components. A known water- and oil-repellent agent may be used as the other water- and oil-repellent agent, and for example, a non-fluorine water- and oil-repellent agent may be used. Examples of non-fluorine water- and oil-repellent components include, but are not limited to, acrylic polymers described, for example, in WO/2020/054856, WO/2017/159754 and WO/2020/162547, polyurethane described in, for example, National Publication of International Patent Application No. 2016-524628, National Publication of International Patent Application No. 2017-533976, National Publication of International Patent Application No. 2017-504730, WO/2021/132170 and WO/2021/132172, and a modified natural product described, for example, in WO/2022/065382 and WO/2022/065385.

### [Amount of other water- and oil- repellent components]

The amount of other water- and oil- repellent components may be 0.01 parts by weight or more, 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, and 500 parts by weight or less, 300 parts by weight or less, 200 parts by weight or less, 100 parts by weight or less, 30 parts by weight or less, 20 parts by weight or less, 10 parts by weight or less, 5 parts by weight or less, 3 parts by weight or less, or 1 part by weight or less relative to 100 parts by weight of the fluorine-containing compound.

### {Dispersant}

The water- and oil-repellent agent of present disclosure may comprise a dispersant.

The dispersant may be at least one selected from an organic dispersant and an inorganic dispersant. The dispersant may be non-anionic, and may be at least one selected from a nonionic dispersant, a cationic dispersant, an amphoteric dispersant and an inorganic dispersant. The water- and oil-repellent agent may not include an anionic dispersant.

An organic dispersant and an inorganic dispersant may be used as the dispersant, respectively, or an organic dispersant and an inorganic dispersant may be used in combination.

An organic dispersant may be used as the dispersant. The organic dispersant may be classified into a nonionic dispersant, an anionic dispersant, a cationic dispersant and an amphoteric dispersant. The organic dispersant may mean a surfactant.

The dispersant may have no fluorine.

### [Nonionic dispersant]

The dispersant may comprise a nonionic dispersant. The nonionic dispersant may be a nonionic surfactant.

The nonionic dispersant may be of low molecular weight or high molecular weight. The nonionic dispersant may have a molecular weight of 100 or more, 500 or more, 1,000 or more, 2,000 or more, 4,000 or more, or 6,000 or more, and 100,000 or less, 50,000 or less, 25,000 or less, 10,000 or less, 7,500 or less, 5,000 or less, 2,500 or less, 1,000 or less, 750 or less, or 250 or less.

Examples of nonionic dispersant include ether, ester, ester ether, alkanolamide, polyol and amine oxide.

The ether is, for example, a compound having an oxyalkylene group (preferably a polyoxyethylene group).

The ester is, for example, an ester of an alcohol and a fatty acid. The alcohol is, for example, an alcohol which is monohydric to hexahydric (particularly dihydric to pentahydric) and has 1 to 50 carbon atoms (particularly 10 to 30 carbon atoms) (for example, an aliphatic alcohol). Examples of the fatty acids are saturated or unsaturated fatty acids having 2 to 50 carbon atoms, particularly 5 to 30 carbon atoms.

The ester ether is, for example, a compound in which an alkylene oxide (particularly ethylene oxide) is added to an ester of an alcohol and a fatty acid. The alcohol is, for example, an alcohol which is monohydric to hexahydric (particularly dihydric to pentahydric) and has 1 to 50 carbon atoms (particularly 3 to 30 carbon atoms) (for example, an aliphatic alcohol). Examples of the fatty acids are saturated or unsaturated fatty acids having 2 to 50 carbon atoms, particularly 5 to 30 carbon atoms.

The alkanolamide is formed of for example, a fatty acid and an alkanolamine. The alkanolamide may be a monoalkanolamide or a dialkanolamide. Examples of the fatty acids are saturated or unsaturated fatty acids having 2 to 50 carbon atoms, particularly 5 to 30 carbon atoms. The alkanolamine may be an alkanol with 1 to 3 amino groups and 1 to 5 hydroxyl groups, having 2 to 50, particularly 5 to 30 carbon atoms.

The polyol may be, for example, a dihydric to pentahydric alcohol having 10 to 30 carbon atoms.

The amine oxide may be an oxide (for example, having 5 to 50 carbon atoms) of an amine (secondary amine or preferably tertiary amine).

The nonionic dispersant is preferably a nonionic dispersant having an oxyalkylene group (preferably a polyoxyethylene group). The alkylene group in the oxyalkylene group preferably has 2 to 10 carbon atoms. The number of oxyalkylene groups in the molecule of the nonionic dispersant is generally preferably 2 to 100.

The nonionic dispersant is selected from the group consisting of an ether, an ester, an ester ether, an alkanolamide, a polyol, or an amine oxide, and is preferably a nonionic dispersant having an oxyalkylene group.

The nonionic dispersant may be, for example, an alkylene oxide adduct of a linear and/or branched aliphatic (saturated and/or unsaturated) group, a polyalkylene glycol ester of a linear and/or branched fatty acid (saturated and/or unsaturated), a sorbitan ester of a linear and/or branched fatty acid (saturated and/or unsaturated), a glycerin ester of a linear and/or branched fatty acid (saturated and/or unsaturated), a polyglycerol ester of a linear and/or branched fatty acid (saturated and/or unsaturated), a sucrose ester of a linear and/or branched fatty acid (saturated and/or unsaturated), a polyoxyethylene (POE)/polyoxypropylene (POP) copolymer (random copolymer or block copolymer), and an alkylene oxide adduct of acetylene glycol. Among them, the nonionic dispersant is preferably a dispersant such that the structures of the alkylene oxide addition moiety and polyalkylene glycol moiety are polyoxyethylene (POE) or polyoxypropylene (POP) or POE/POP copolymer (which may be a random or block copolymer, for example.).

Furthermore, the nonionic dispersant may not include an aromatic group.

The nonionic dispersant may be the compound represented by the formula:

R¹O-(CH₂CH₂O)ₚ-(R²O)_{q}-R³

wherein R¹ is an alkyl group having 1 to 22 carbon atoms, an alkenyl group or an acyl group, having 2 to 22 carbon atoms,
R² is each independently the same or different and is an alkylene group having 3 or more carbon atoms (for example, 3 to 10),
R³ is a hydrogen atom, an alkyl group having 1 to 22 carbon atoms, or an alkenyl group having 2 to 22 carbon atoms,
p is a numeral of 2 or more,
q is 0 or a numeral of 1 or more.

R¹ preferably has 8 to 20 carbon atoms, particularly 10 to 18 carbon atoms. Preferred specific examples of R¹ include a lauryl group, a tridecyl group, and an oleyl group.

R² is, for example, a propylene group and a butylene group.

In the nonionic dispersant, for example, p may be a numeral of 3 or more (for example, 5 to 200) and q may be a numeral of 2 or more (for example, 5 to 200). Namely, -(R²O)_{q}- may form, for example, a polyoxyalkylene chain.

The nonionic dispersant may be, for example, a polyoxyethylene alkylene alkyl ether comprising a hydrophilic polyoxyethylene chain and a hydrophobic oxyalkylene chain (particularly a polyoxyalkylene chain) in the center. The hydrophobic oxyalkylene chain includes, for example, an oxypropylene chain, an oxybutylene chain, and a styrene chain. The oxypropylene chain is preferred among them.

Specific examples of the nonionic dispersant include a condensation product of ethylene oxide with hexylphenol, isooctatylphenol, hexadecanol, oleic acid, an alkane (C₁₂-C₁₆)thiol, a sorbitan monofatty acid (C₇-C₁₉), an alkyl(C₁₂-C₁₈)amine, or the like, and a sorbitan fatty acid ester, a glycerin fatty acid ester, a polyglycerin fatty acid ester, a sucrose fatty acid ester, a propylene glycol fatty acid ester, a polyoxyethylene alkyl ether, a polyoxyethylene polyoxypropylene alkyl ether, a polyoxyethylene glycerin fatty acid ester, a polyoxyethylene sorbitan fatty acid ester, and a lecithin derivative.

The proportion of the polyoxyethylene block can be 5 to 80% by weight, for example, 30 to 75% by weight, particularly 40 to 70% by weight, based on a molecular weight of the nonionic dispersant (copolymer).

The average molecular weight of the nonionic dispersant is generally 300 to 5,000, for example, 500 to 3,000.

For example, the nonionic dispersant may be used singly or in admixture of two or more. The nonionic dispersant may be a mixture of a compound with an HLB (hydrophilic-hydrophobic balance) of less than 15 (particularly 5 or less) and a compound with an HLB of 15 or more.

### [Cationic dispersant]

The dispersant may comprise a cationic dispersant. The cationic dispersant may be a cationic surfactant. The cationic dispersant may be of low molecular weight (with a molecular weight of 2,000 or less, in particular, 10,000 or less) or of high molecular weight (with a molecular weight of, for example, 2,000 or more). The cationic dispersant may not have an amide group.

The cationic dispersant may be of low molecular weight or high molecular weight. The cationic dispersant may have a molecular weight of 100 or more, 500 or more, 1,000 or more, 2,000 or more, 4,000 or more, or 6,000 or more, and 100,000 or less, 50,000 or less, 25,000 or less, 10,000 or less, 7,500 or less, 5,000 or less, 2,500 or less, 1,000 or less, 750 or less, or 250 or less.

The cationic dispersant may be an amine salt, quaternary ammonium salt, or oxyethylene-added ammonium salt. Specific examples of the cationic surfactant include, but are not limited to, amine salt type dispersants such as an alkylamine salt, amino alcohol fatty acid derivative, polyamine fatty acid derivative, and imidazoline; quaternary ammonium salt type dispersants such as an alkyltrimethylammonium salt, dialkyldimethylammonium salt, alkyldimethylbenzylammonium salt, pyridinium salt, alkylisoquinolinium salt, benzalkonium chloride and benzethonium chloride.

Preferred examples of the cationic dispersant are the compound represented by the formula:

R²¹-N⁺(-R²²)(-R²³)(-R²⁴)X⁻

wherein R²¹, R²², R²³, R²⁴ are each a hydrocarbon group having 1 to 40 carbon atoms, and
X is an anionic group.

Specific examples of R²¹, R²², R²³, -R²⁴ are alkyl groups (for example, a methyl group, a butyl group, a stearyl group, and a palmityl group). Specific examples of X are halogen (for example, chlorine) and acids (hydrochloric acid and acetic acid).

The cationic dispersant is particularly preferably a monoalkyltrimethylammonium salt (with an alkyl having 4 to 40 carbon atoms).

The cationic dispersant is preferably an ammonium salt. The cationic dispersant may be, for example, an ammonium salt represented by the formula:

R¹ₚ-N⁺R²_{q}X⁻

wherein R¹ is a C12 or more (for example C₁₂ to C₅₀) linear and/or branched aliphatic (saturated and/or unsaturated) group,
R² is H or a C1 to C4 alkyl group, a benzyl group, a polyoxyethylene group (the number of oxyethylene group is, for example, 1 (particularly 2, especially 3) to 50), and is particularly preferably CH₃ and C₂H₅,
X is a halogen atom (for example) and a C₁ to C₄ fatty acid base,
p is 1 or 2, q is 2 or 3, and p + q=4.
The number of carbon atoms of R¹ may be 12 to 50, for example, 12 to 30.

Specific examples of the cationic dispersants include dodecyltrimethylammonium acetate, trimethyltetradecylammonium chloride, hexadecyltrimethylammonium bromide, trimethyloctadecylammonium chloride, (dodecylmethylbenzyl)trimethylammonium chloride, benzyldodecyldimethylammonium chloride, methyldodecyl di(hydropolyoxyethylene) ammonium chloride, benzyldodecyl di(hydropolyoxyethylene) ammonium chloride, and N-[2-(diethylamino)ethyl]oleamide hydrochloride.

### [Anionic dispersant]

The dispersant may comprise an anionic dispersant. The anionic dispersant may be an anionic surfactant. The dispersant may not include an anionic dispersant.

The anionic dispersant may be of low molecular weight or high molecular weight. The anionic dispersant may have a molecular weight of 100 or more, 500 or more, 1,000 or more, 2,000 or more, 4,000 or more, or 6,000 or more, and 100,000 or less, 50,000 or less, 25,000 or less, 10,000 or less, 7,500 or less, 5,000 or less, 2,500 or less, 1,000 or less, 750 or less, or 250 or less.

Examples of the anionic dispersant include an alkyl ether sulfate, an alkyl sulfate, an alkenyl ether sulfate, an alkenyl sulfate, an olefin sulfonate, an alkanesulfonate, a saturated or unsaturated fatty acid salt, an alkyl or alkenyl ether carbonate, an α-sulfone fatty acid salt, a N-acylamino acid dispersant, a phosphate mono- or diester dispersant, and a sulfosuccinic acid ester.

### [Amphoteric dispersant]

The dispersant may comprise an amphoteric dispersant. The amphoteric dispersant may be an amphoteric surfactant.

The amphoteric dispersant may be of low molecular weight or high molecular weight. The amphoteric dispersant may have a molecular weight of 100 or more, 500 or more, 1,000 or more, 2,000 or more, 4,000 or more, or 6,000 or more, and 100,000 or less, 50,000 or less, 25,000 or less, 10,000 or less, 7,500 or less, 5,000 or less, 2,500 or less, 1,000 or less, 750 or less, or 250 or less.

Examples of the amphoteric dispersants include, for example, alanines, imidazolinium betaines, amidobetaines, and acetic acid betaine, and specific examples of the amphoteric dispersants include, for example, lauryl betaine, stearyl betaine, lauryl carboxymethyl hydroxyethyl imidazolinium betaine, lauryl dimethylamino acetic acid betaine, and fatty acid

### amidopropyldimethylaminoacetic acid betaine.

### [Inorganic dispersant]

The dispersant may comprise an inorganic dispersant.

The inorganic dispersant has an average primary particle size of 5 nm or larger, 30 nm or larger, 100 nm or larger, 1 µm or larger, 10 µm or larger, or 25 µm or larger, and 100 µm or smaller, 50 µm or smaller, 10 µm or smaller, 1 µm or smaller, 500 nm or smaller, or 300 nm or smaller. The average primary particle size may be measured by a microscope, for example, a scanning electron microscope or a transmission electron microscope. The inorganic dispersant may be hydrophilic particles.

Examples of inorganic dispersants include polyvalent metal phosphate such as tricalcium phosphate, magnesium phosphate, aluminum phosphate, zinc phosphate and hydroxyapatite; carbonate such as calcium carbonate and magnesium carbonate; silicate such as calcium metasilicate; sulfate such as calcium sulfate and barium sulfate; and hydroxide such as calcium hydroxide, magnesium hydroxide and aluminum hydroxide.

### [Amount of Dispersant]

The amount of dispersant may be 0.01 parts by weight or more, 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, relative to 100 parts by weight of the fluorine-containing compound, and may be 500 parts by weight or less, 300 parts by weight or less, 200 parts by weight or less, 100 parts by weight or less, 30 parts by weight or less, 20 parts by weight or less, 10 parts by weight or less, 5 parts by weight or less, 3 parts by weight or less, or 1 part by weight or less.

### {Liquid medium}

The water- and oil-repellent agent in the present disclosure may comprise a liquid medium. The liquid medium may be water, an organic solvent, or a mixture of water and an organic solvent. The water- and oil-repellent agent may be a dispersion or a solution. The water- and oil-repellent agent in the present disclosure may be in the form of a water dispersion, and may include at least water.

Examples of the organic solvents include esters (for example, esters having 2 to 40 carbon atoms, specifically ethyl acetate and butyl acetate), ketones (for example, ketones having 2 to 40 carbon atoms, specifically methyl ethyl ketone and diisobutyl ketone), alcohols (for example, alcohols having 1 to 40 carbon atoms, specifically isopropyl alcohol), aromatic solvents (for example, toluene and xylene), petroleum-based solvents (for example, alkanes having 5 to 10 carbon atoms, specifically, naphtha and kerosene). The organic solvent is preferably a water-soluble organic solvent. The water-soluble organic solvent may include a compound having at least one hydroxy group (for example, polyol such as alcohol and glycol solvent, and an ether form of polyol (for example, a monoether form)). These may be used alone, or two or more of them may be used in combination.

### [Amount of liquid medium]

The amount of liquid medium may be 1 part by weight or more, 3 parts by weight or more, 5 parts by weight or more, 10 parts by weight or more, 20 parts by weight or more, 30 parts by weight or more, 40 parts by weight or more, or 50 parts by weight or more, 100 parts by weight or more, 200 parts by weight or more, 300 parts by weight or more, 500 parts by weight or more, or 1,000 parts by weight or more, and 3,000 parts by weight or less, 2,000 parts by weight or less, 1,000 parts by weight or less, 500 parts by weight or less, 200 parts by weight or less, 175 parts by weight or less, 150 parts by weight or less, 125 parts by weight or less, 100 parts by weight or less, 80 parts by weight or less, 60 parts by weight or less, 40 parts by weight or less, 20 parts by weight or less, or 10 parts by weight or less relative to 1 part by weight of the fluorine-containing compound.

The amount of water may be 1 part by weight or more, 3 parts by weight or more, 5 parts by weight or more, 10 parts by weight or more, 20 parts by weight or more, 30 parts by weight or more, 40 parts by weight or more, 50 parts by weight or more, 100 parts by weight or more, 200 parts by weight or more, 300 parts by weight or more, 500 parts by weight or more, or 1,000 parts by weight or more, and 3,000 parts by weight or less, 2,000 parts by weight or less, 1,000 parts by weight or less, 500 parts by weight or less, 200 parts by weight or less, 175 parts by weight or less, 150 parts by weight or less, 125 parts by weight or less, 100 parts by weight or less, 80 parts by weight or less, 60 parts by weight or less, 40 parts by weight or less, 20 parts by weight or less, or 10 parts by weight or less relative to 1 part by weight of the fluorine-containing compound.

The amount of the organic solvent may be 1 part by weight or more, 3 parts by weight or more, 5 parts by weight or more, 10 parts by weight or more, 20 parts by weight or more, 30 parts by weight or more, 40 parts by weight or more, 50 parts by weight or more, 100 parts by weight or more, 200 parts by weight or more, 300 parts by weight or more, 500 parts by weight or more, or 1,000 parts by weight or more, and 3,000 parts by weight or less, 2,000 parts by weight or less, 1,000 parts by weight or less, 500 parts by weight or less, 200 parts by weight or less, 175 parts by weight or less, 150 parts by weight or less, 125 parts by weight or less, 100 parts by weight or less, 80 parts by weight or less, 60 parts by weight or less, 40 parts by weight or less, 20 parts by weight or less, or 10 parts by weight or less relative to 1 part by weight of the fluorine-containing compound.

### {Silicone}

The water- and oil-repellent agent in the present disclosure may include silicone (polyorganosiloxane). Containing the silicone enables providing favorable texture and durability in addition to favorable liquid-repellency.

As the silicone, a known silicone can be used, and examples of the silicone include a polydimethylsiloxane and modified silicones (for example, amino-modified silicone, epoxy-modified silicone, carboxy-modified silicone, and methylhydrogen silicone). For example, the silicone may be silicone wax having waxy properties. These may be used singly or in combination of two or more thereof.

A weight-average molecular weight of the silicone may be 1,000 or more, 10,000 or more, or 50,000 or more, and may be 500,000 or less, 250,000 or less, 100,000 or less, or 50,000 or less.

### [Amount of Silicone]

The amount of silicone is 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, relative to 100 parts by weight of the fluorine-containing compound, and may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, or 5 parts by weight or less.

### {Wax}

The water- and oil-repellent agent in the present disclosure may include wax. Containing the wax can impart favorable liquid-repellency to a substrate.

Examples of wax include paraffin wax, microcrystalline wax, Fischer-Tropsch wax, polyolefin wax (for example, polyethylene wax and polypropylene wax), oxidized polyolefin wax, silicone wax, animal and vegetable wax and mineral wax. Paraffin wax is preferred. Specific examples of compounds constituting wax include n-alkane (such as tricosane, tetracosane, pentacosane, hexacosane, heptacosan, octacosan, nonacosan, triacontane, hentriacontane, dotriacontane, tritriacontane, tetratriacontane, pentatriacontane, hexatriacontane), n-alkene (such as 1-icosene, 1-docosene, 1-tricosene, 1-tetracosene, 1-pentacosene, 1-hexacosene, 1-heptacosene, 1-octacosene, 1-nonacosene, 1-triacontane, 1-hentriacontane, 1-dotriacontane, 1-tritriacontane, 1-tetratriacontane, 1-pentatriacontane, 1-hexatriacontane). The number of carbon atom in the compound constituting the wax is preferably 20 to 60, for example 25 to 45. A molecular weight of the wax may be 200 to 2,000, for example, 250 to 1,500 or 300 to 1,000. These may be used singly or in combination of two or more thereof.

The wax may have a melting point of 40°C or higher, 50°C or higher, 55°C or higher, 60°C or higher, 65°C or higher, or 70°C or higher, preferably 55°C or higher, more preferably 60°C or higher, and 200°C or lower, 150°C or lower, 130°C or lower, 120°C or lower, 110°C or lower, 100°C or lower, 80°C or lower, or 50°C or lower, and preferably 120°C or lower. The melting point of wax is measured according to JIS K 2235-1991.

### [Amount of Wax]

The amount of wax may be 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, relative to 100 parts by weight of the fluorine-containing compound, and may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, or 5 parts by weight or less.

### {Organic Acid}

The water- and oil-repellent agent of the present disclosure may contain an organic acid. As the organic acid, a known organic acid can be used. Examples of the organic acid preferably include, for example, a carboxylic acid, a sulfonic acid, and a sulfinic acid, with the carboxylic acid being particularly preferred. Examples of the carboxylic acid include, for example, formic acid, acetic acid, propionic acid, butyric acid, oxalic acid, succinic acid, glutaric acid, adipic acid, malic acid, and citric acid, with the formic acid or acetic acid being particularly preferred. In the present disclosure, one type of organic acid may be used, or two or more thereof may be combined for use. For example, formic acid and acetic acid may be combined for use.

### [Amount of Organic Acid]

The amount of organic acid may be 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, relative to 100 parts by weight of the fluorine-containing compound, and may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, or 5 parts by weight or less. The amount of organic acid may be adjusted so that a pH of the water- and oil-repellent agent is 3 to 10, for example 5 to 9, particularly 6 to 8. For example, the water- and oil-repellent agent may be acidic (pH of 7 or less, for example 6 or less).

### {Curing Agent}

The water- and oil-repellent agent of the present disclosure may contain a curing agent (active hydrogen-reactive compound or active hydrogen-containing compound).

The curing agent (cross-linking agent) in the water- and oil-repellent agent can effectively cure the fluorine-containing compound. The curing agent may be an active hydrogen-reactive compound or an active hydrogen-containing compound, which reacts with an active hydrogen or an active hydrogen-reactive group that the fluorine-containing compound has. Examples of the active hydrogen-reactive compound include an isocyanate compound, epoxy compound, chloromethyl group-containing compound, carboxyl group-containing compound, and hydrazide compound. Examples of the active hydrogen-containing compound include a hydroxyl group-containing compound, an amino group-containing compound and a carboxyl group-containing compound, a ketone group-containing compound, a hydrazide compound, and a melamine compound.

The curing agent may contain an isocyanate compound. The isocyanate compound may be a polyisocyanate compound. The polyisocyanate compound is a compound having two or more isocyanate groups in one molecule. The polyisocyanate compound serves as a cross-linking agent. Examples of the polyisocyanate compound include, for example, an aliphatic polyisocyanate, an alicyclic polyisocyanate, an aromatic-aliphatic polyisocyanate, an aromatic polyisocyanate, and derivatives of these polyisocyanates. The isocyanate compound may be a blocked isocyanate compound (for example, a blocked polyisocyanate compound). The blocked isocyanate compound is a compound in which an isocyanate group of an isocyanate compound is masked with a blocking agent to inhibit reaction.

Examples of the aliphatic polyisocyanates are aliphatic triisocyanates such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, an aliphatic diisocyanate of 2,6-diisocyanatomethylcaproate, and aliphatic triisocyanates such as lysine ester triisocyanate, 1,4,8-triisocyanateoctane, 1,6,11-triisocyanatoundecane, 1,8-diisocyanato-4-isocyanatomethyloctane, 1,3,6-triisocyanatohexane, 2,5,7-trimethyl-1,8-diisocyanato-5-isocyanatomethyloctane. These may be used singly or in combination of two or more thereof.

Examples of the alicyclic polyisocyanates include, for example, an alicyclic diisocyanate and an alicyclic triisocyanate. Specific examples of the alicyclic polyisocyanate include 1,3-cyclopentene diisocyanate, 3-isocyanatomethyl-3,5,5-trimethylcyclohexyl isocyanate (isophorone diisocyanate), and 1,3,5-triisocyanatocyclohexane. These may be used singly or in combination of two or more thereof.

Examples of the aromatic-aliphatic polyisocyanate include an aromatic-aliphatic diisocyanate and aromatic-aliphatic triisocyanate. Specific examples of the aromatic-aliphatic polyisocyanate include 1,3- or 1,4-xylylene diisocyanate or a mixture thereof, 1,3- or 1,4-bis(1-isocyanato-1-methylethyl)benzene (tetramethyl xylylene diisocyanate) or a mixture thereof, and 1,3,5-triisocyanatomethylbenzene. These may be used singly or in combination of two or more thereof.

Examples of the aromatic polyisocyanates include an aromatic diisocyanate, aromatic triisocyanate, and aromatic tetraisocyanate. Specific examples of the aromatic polyisocyanate include, for example, m-phenylene diisocyanate, p-phenylene diisocyanate, 4,4'-diphenyl diisocyanate, 1,5-naphthalene diisocyanate, 2,4'- or 4,4'-diphenylmethane diisocyanate, or a mixture thereof, 2,4- or 2,6-tolylene diisocyanate or a mixture thereof, triphenylmethane-4,4',4''-triisocyanate, and 4,4'-diphenylmethane-2,2',5,5'-tetraisocyanate. These may be used singly or in combination of two or more thereof.

Examples of the derivative of the polyisocyanate include various derivatives such as a dimer, trimer, biuret, allophanate, carbodiimide, urethodione, urethoimine, isocyanurate, and iminooxadiazinedione of the aforementioned polyisocyanate compounds. These may be used singly or in combination of two or more thereof.

These polyisocyanates can be used singly or in combination of two or more thereof.

As the polyisocyanate compound, a blocked polyisocyanate compound (blocked isocyanate), which is a compound obtained by blocking isocyanate groups of the polyisocyanate compound with a blocking agent, is preferably used. The blocked polyisocyanate compound is preferably used because it is relatively stable even in solution and can be used in the same solution as solution of the water- and oil-repellent agent.

The blocking agent is an agent that blocks free isocyanate groups. The blocked polyisocyanate compound, for example, can be heated 100°C or higher, for example, 130°C or higher to regenerate isocyanate groups, facilitating a reaction with hydroxyl groups. Examples of the blocking agent include, for example, a phenolic compound, lactam-based compound, aliphatic alcohol-based compound, and oxime-based compound. The polyisocyanate compound may be used singly or in combination of two or more thereof.

The epoxy compound is a compound having an epoxy group. Examples of the epoxy compound include epoxy compounds having a polyoxyalkylene group, such as a polyglycerol polyglycidyl ether and a polypropylene glycol diglycidyl ether; as well as a sorbitol polyglycidyl ether.

The chloromethyl group-containing compound is a compound having a chloromethyl group. Examples of the chloromethyl group-containing compound include, for example, a chloromethyl polystyrene.

The carboxyl group-containing compound is a compound having a carboxyl group. Examples of the carboxyl group-containing compound include, for example, a (poly)acrylic acid, and a (poly)methacrylic acid.

Specific examples of the ketone group-containing compound include, for example, a (poly)diacetone acrylamide, and diacetone alcohol.

Specific examples of the hydrazide compound include, for example, hydrazine, a carbohydrazide, and adipic acid hydrazide.

Specific examples of the melamine compound include, for example, a melamine resin and a methyl etherified melamine resin.

### [Amount of Curing Agent]

The amount of the curing agent may be 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, relative to 100 parts by weight of the fluorine-containing compound, and may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, and 5 parts by weight or less.

### {Other Component}

The water- and oil-repellent agent may contain a component other than the aforementioned components. Examples of the other components include, for example, polysaccharides, a paper strengthening agent, an agglomerating agent, a yield improver, a coagulant, a binder resin, an anti-slip agent, a sizing agent, a paper strengthening agent, PVA, a penetrant, an organic acid, a pigment, a filler, an antistatic agent, an antiseptic agent, an ultraviolet absorber, an antibacterial agent, a deodorant, and a fragrance. These may be used singly or in combination of two or more thereof.

In addition to the above components, as other components, for example, other water-repellent and/or oil-repellent agents, a dispersant, a texture modifier, a softening agent, a flame retarder, a coating material fixing agent, a wrinkle-resistant agent, a drying rate adjuster, a cross-linking agent, a film formation agent, a compatibilizer, an antifreezing agent, a viscosity adjuster, an ultraviolet absorber, an antioxidant, a pH adjuster, an insect repellent, an antifoaming agent, an anti-shrinkage agent, a laundry wrinkle-resistant agent, a shape retention agent, a drape retention agent, an ironing improving agent, a brightening agent, a whitening agent, fabric softening clay, a migration-proofing agent such as a polyvinylpyrrolidone, a polymer dispersant, a soil release agent, a scum dispersant, a fluorescent brightening agent such as 4,4-bis(2-sulfostyryl)biphenyldisodium (Tinopal CBS-X manufactured by Ciba Specialty Chemicals Plc), a dye fixing agent, an anti-color fading agent such as 1,4-bis(3-aminopropyl) piperazine, a stain removing agent, enzymes such as cellulase, amylase, protease, lipase, and keratinase as fiber surface modifiers, a foam inhibitor, and silk protein powder that can impart texture and functions of silk such as moisture absorption and release properties, and surface modified products or emulsified dispersions thereof (for example, K-50, K-30, K-10, A-705, S-702, L-710, FP series (Idemitsu Petrochemical Co., Ltd.), hydrolyzed silk liquid (Jomo), SILKGEN G Soluble S (ICHIMARU PHARCOS Co., Ltd.)), an antifouling agent (for example, a nonionic polymer compound composed of an alkylene terephthalate and/or an alkylene isophthalate units and a polyoxyalkylene unit (for example, FR627 manufactured by GOO CHEMICAL CO., LTD.), SRC-1 manufactured by Clariant (Japan), K. K.), can be compounded. These may be used singly or in combination of two or more thereof.

### [Polysaccharide]

Examples of polysaccharides include starch, xanthan gum, karaya gum, welan gum, guar gum, pectin, tamarind gum, carrageenan, chitosan, gum arabic, locust bean gum, cellulose, alginic acid, agar, dextran, cellulose, carboxymethylcellulose, hydroxyethylcellulose, hydroxypropylcellulose, chitin nanofiber, cellulose nanofiber and pullulan. The polysaccharide may be a substituted modified polysaccharide, particularly a modified polysaccharide having a hydroxyl group or a cationic group introduced therein.

### [Paper Strengthening Improver, Agglomerating agent, Yield Improver or Coagulant]

Examples of the paper strengthening improver, agglomerating agent, yield improver or coagulant include, for example, a styrenic polymer (styrene/maleic acid polymer, styrene/acrylic acid polymer), a ureaformaldehyde polymer, a polyethyleneimine, a melamine-formaldehyde polymer, a polyamidoamine-epichlorohydrin polymer, a polyacrylamide-based polymer, a polyamine-based polymer, a polydiallyldimethylammonium chloride, a alkylamine-epichlorohydrin condensate, a condensate of alkylene dichloride and polyalkylenepolyamine, a dicyandiamide formalin condensate, a dimethyldiallylammonium chloride polymer, and an olefin/maleic anhydride polymer.

### [Sizing Agent]

Examples of the sizing agent include a cellulose-reactive sizing agent, for example, a rosin-based sizing agent such as rosin-based soap, rosin-based emulsion/a dispersion, a cellulose-reactive sizing agent, for example, emulsion/dispersions of acid anhydrides such as alkyl and alkenyl succinic anhydrides (ASA), an alkenyl and alkyl ketene dimers (AKD) and multimers thereof, and anionic, cationic and amphoteric polymers of ethylenically unsaturated monomers, for example, a styrene and acrylate copolymer.

### [Antistatic Agent]

Examples of the antistatic agent include, for example, cationic antistatic agents having cationic functional groups such as a quaternary ammonium salt, a pyridinium salt, and primary, secondary, and tertiary amino groups; anionic antistatic agents having anionic functional groups such as a sulfonate salt and a sulfate ester salt, a phosphonate and a phosphate ester salt; amphoteric antistatic agents such as an alkyl betaine and a derivative thereof, imidazoline and a derivative thereof, and alanine and a derivative thereof; and nonionic antistatic agents such an amino alcohol and a derivative thereof, glycerin and a derivative thereof, and a polyethylene glycol and a derivative thereof. For example, an ion conductive polymer obtained by polymerizing or copolymerizing a monomer having an ion conductive group of the cationic, anionic, or amphoteric antistatic agent, may be used. These may be used singly or in combination of two or more thereof.

### [Antiseptic Agent]

The antiseptic agent may be used mainly to enhance antisepsis power and bactericidal power to maintain antiseptic during long-term storage. Examples of the antiseptic agent include isothiazolone-based organosulfur compounds, benzisothiazolone-based organosulfur compounds, benzoic acids, and 2-bromo-2-nitro-1,3-propanediol.

### [Ultraviolet Absorber]

The ultraviolet absorber is an agent that has a protection effect against ultraviolet rays, and is a component that absorbs ultraviolet rays, converts them into infrared rays, visible rays, and the like, and emits them. Examples of the ultraviolet absorber include aminobenzoic acid derivatives, salicylic acid derivatives, silicic acid derivatives, benzophenone derivatives, azole-based compounds, and 4-t-butyl-4'-methoxybenzoylmethane.

### [Antibacterial Agent]

The antibacterial agent is a component that exhibits the effect of inhibiting bacteria from growing on fibers and further exhibits the effect of inhibiting generation of unpleasant odors derived from decomposition products of microorganisms. Examples of the antibacterial agents include, for example, cationic antibacterial agents such as a quaternary ammonium salt, bis-(2-pyridylthio-1-oxide) zinc, a polyhexamethylene biguanidine hydrochloride salt, 8-oxyquinoline, and a polylysine.

### [Deodorant]

Examples of the deodorant include cluster dextrin, methyl-β-cyclodextrin, 2-hydroxypropyl-β-cyclodextrin, monoacetyl-β-cyclodextrin, acylamidopropyl dimethylamine oxide, and an aminocarboxylic acid-based metal complex (the zinc complex of trisodium methylglycine diacetate described in WO2012/090580).

### [Amount of Other Component]

Each amount or the total amount of other components may be 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, relative to 100 parts by weight of the fluorine-containing compound, and may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, or 5 parts by weight or less.

### <Production Method of Treated Textile Product or Paper Product>

A method for producing a product treated with the water- and oil-repellent agent in the present disclosure includes a treatment step of treating a substrate with the water- and oil-repellent agent described above.

The "treatment" refers to applying the water- and oil-repellent agent to a substrate by dipping, spraying, coating, etc. By the treatment, a fluorine-containing compound that is an active ingredient of the water- and oil-repellent agent, adheres to an inside and/or on a surface of the substrate. Herein, the adhesion may be physical adhesion or chemical adhesion, and, for example, the fluorine-containing compound may be physically or chemically (by reaction) modified onto a hydroxyl group of a substrate (for example, a fiber, paper, and glass).

### [Substrate]

Substrates to be treated with the water- and oil-repellent agent in the present disclosure are not limited, and are preferably a textile product or a paper product, and in particular, a paper product.

The water- and oil-repellent agent in the present disclosure imparts liquid-repellency to a substrate (e.g., fiber substrate, paper substrate), and may function as at least one selected from a water-repellent agent, an oil-repellent agent, an oil-resistant agent and a water-resistant agent. The substrate which has been treated with the water- and oil-repellent agent in the present disclosure, for example, is an oil-repellent paper or a water-repellent paper.

Examples of the substrate for textile products include animal and vegetable natural fibers such as cotton, linen, wool, and silk, synthetic fibers such as a polyamide, a polyester, a polyvinyl alcohol, a polyacrylonitrile, a polyvinyl chloride, and a polypropylene, and semi-synthetic fibers such as rayon and acetate, inorganic fibers such as a glass fiber, a carbon fiber, and an asbestos fiber, or blended fibers thereof. The textile products include a woven fabric, a knitted fabric, a nonwoven fabric, fabric in the form of clothing (for example, water-repellent garments, for example, a raincoat) and carpets, and a fiber, yarn and intermediate fiber product (for example, a sliver or a crude yarn) in a state of before being formed into fabric, may undergo treatment.

Examples of the substrate for paper products include, for example, bleached or unbleached chemical pulp such as kraft pulp or sulfite pulp, bleached or unbleached high-yield pulp such as groundwood pulp, mechanical pulp, or thermomechanical pulp, paper made from wastepaper pulp such as wastepaper of newspapers, magazines, and cardboard, and deinked wastepaper, a container made of paper, and a molded product made of paper. Specific examples of the paper products include, for example, a food packaging material, a food container, gypsum liner board base paper, coated base paper, medium-quality paper, a general liner and core, neutral pure white roll paper, a neutral liner, a rust-proof liner, and metal pasted paper, kraft paper, neutral printing writing paper, neutral coated base paper, neutral PPC paper, neutral thermal paper, neutral pressure-sensitive base paper, neutral inkjet paper and neutral information paper, and molded paper (mold container), and suitable examples thereof include the food packaging material and the food container.

A substrate to be treated with the water- and oil-repellent agent of the present disclosure is not limited to textile products or paper products, and it may also include, for example, stone, a filter (for example, an electrostatic filter), a dust-protective mask, fuel cell parts (for example, a gas diffusion electrode and a gas diffusion support), glass, wood, leather, fur, asbestos, brick, cement, metal and oxide, a ceramic product, a plastic, a painted surface, and a plaster.

When the substrate is glass, a glass product to be produced may be an optical member. A certain layer (or film), such as a hard coat layer or an antireflection layer, may be formed on the surface (outermost layer) of a glass substrate. The antireflection layer may be any of a single-layer antireflection layer and a multi-layer antireflection layer. Examples of inorganic substances usable in the antireflection layer include SiO₂, SiO, ZrO₂, TiO₂, TiO, Ti₂O₃, Ti₂O₅, Al₂O₃, Ta₂O₅, CeO₂, MgO, Y₂O₃, SnO₂, MgF₂, and WO₃. One of these inorganic substances may be used singly, or two or more may be used in combination (e.g., as a mixture). In the case of a multi-layer antireflection layer, SiO₂ and/or SiO is preferably used in the outermost layer thereof. When the article to be produced is an optical glass component for a touch panel, a part of the surface of the substrate (glass) may have a transparent electrode such as a thin film in which indium tin oxide (ITO), indium zinc oxide, or the like is used. The substrate, according to its specific configuration or the like, may have an insulating layer, an adhesive layer, a protecting layer, a decorated frame layer (I-CON), an atomizing film layer, a hard coating layer, a polarizing film, a phase difference film, a liquid crystal display module, or the like.

### [Treatment Method]

The water- and oil-repellent agent of the present disclosure can be applied to a substrate as a treatment agent (particularly a surface-treating agent) by a conventionally known method. The treatment method may be a method for dispersing the water- and oil-repellent agent in the present disclosure in an organic solvent or water, if necessary, to dilute it and allowing it to adhere to an inside of a substrate and/or on a surface thereof by a known method such as dip coating, spray coating, and foam coating, and drying the liquid. After drying, a product to which a solid component of the water- and oil-repellent agent has been adhered, is obtained. If necessary, the water and oil-repellent agent of the present disclosure may be applied in combination of a suitable cross-linking agent, and curing may be carried out. If necessary, the water- and oil-repellent agent of the present disclosure can be further combined for use with various additives such as water- and/or oil-repellent agents, an anti-slip agent, an antistatic agent, a texture modifier, a softening agent, an antibacterial agent, a flame retarder, a coating material fixing agent, a wrinkle-resistant agent, a drying rate adjuster, a cross-linking agent, a film formation agent, a compatibilizer, an antifreezing agent, a viscosity modifier, an ultraviolet absorber, an antioxidant, a pH adjuster, an insect repellent, and an antifoaming agent. Examples of the various additives may be the same as those explained in the section "Other Component" described above. A concentration of the water- and oil-repellent agent in a treatment agent brought into contact with a substrate may be appropriately changed depending on its use, and may be 0.01 to 10% by weight, for example 0.05 to 5% by weight.

The water- and oil-repellent agent can be applied to a substrate by any of methods known for treating a substrate with liquid. The substrate may be immersed in the water- and oil-repellent agent, or solution may be adhered or sprayed onto the substrate. The treated substrate is preferably dried and cured by heating in order to develop liquid-repellency. The heating temperature may be, for example, 100°C to 200°C, 100°C to 170°C, or 100°C to 120°C. Favorable performance can be obtained even by heating at lowered temperatures (for example, 100°C to 140°C) in the present disclosure. In the present disclosure, the heating time may be 5 seconds to 60 minutes, for example, 30 seconds to 3 minutes. When the substrate is paper, the paper may undergo coating, or solution may be adhered or sprayed onto the paper, or the solution may be mixed with pulp slurry before papermaking to undergo treatment. The treatment may be external addition treatment or internal addition treatment. Alternatively, the water- and oil-repellent agent may be applied to a textile product by a cleaning method, and for example, it may be applied to a textile product in, for example, washing application or a dry cleaning method.

### [Paper product Treatment]

Examples of paper substrates include paper, a container made of paper, and a molded product made of paper (for example, a pulp mold). The fluorine-containing compound of the present disclosure adheres well to the paper substrate.

The paper can be produced by a conventionally known papermaking method. An internal addition treatment method in which the water- and oil-repellent agent is added to pulp slurry before papermaking, or an external addition treatment method in which the water- and oil-repellent agent is applied to paper after papermaking, can be employed.

A size press used in an external addition treatment method, can be divided into the following types depending on a coating method.

One coating method involves supplying a coating liquid (size liquid) to a nip portion formed by passing paper between two rubber rolls, creating a pool of the coating liquid called a pond, and allowing the paper to pass through this pool to coat both sides of the paper with the size liquid, which is a method employed for a so-called pound-type two-roll size press. Another coating method is a method used for a gate roll type size press in which a size liquid is applied by a surface transfer type, and a rod metering type size press. In the pound-type two-roll size press, the size liquid easily penetrates into an inside of paper, and in the surface transfer type, a size liquid component is likely to stay on a surface of the paper. In the surface transfer type, a coating layer is likely to stay on a surface of paper more than in the pound-type two-roll size press, and the amount of coating layer formed on the surface is more than in the pound-type two-roll size press. In the present disclosure, even in the case of using the former pound-type two-roll size press, performance can be imparted to paper. After having been lightly dried at room temperature or elevated temperature, the paper treated in such a manner is arbitrarily accompanied by heat treatment that can have a temperature range of up to 300°C, for example up to 200°C, and particularly the temperature range of 80°C to 180°C, depending on the nature of the paper, as a result of which excellent oil resistance, water resistance, and the like can be exhibited.

The internal addition treatment method may refer to a treatment method for adding the water- and oil-repellent agent to pulp slurry before papermaking. The internal addition treatment method may include, but is not limited to, one or more of a step of adding the water- or oil- repellent agent to pulp slurry and stirring and mixing them; a step of sucking and dehydrating the pulp composition prepared in the step through a net-like body of predetermined shape and depositing the pulp composition then to form a pulp mold intermediate; and a step of molding and drying the pulp mold intermediate by using a heated molding mold to obtain paper, a container made of paper, and a molded product made of paper. After having been lightly dried at room temperature or elevated temperature, the treated paper may be arbitrarily subjected to heat treatment, depending on the nature of the paper. Temperature of the heat treatment may be 150°C or higher, 180°C or higher, or 210°C or higher, and may also be 300°C or lower, 250°C or lower, or 200°C or lower, particularly 80°C to 180°C. Carrying out the heat treatment in such a temperature range enables exhibiting, for example, excellent oil resistance and water resistance.

The present disclosure can be used, for example, in gypsum liner board base paper, coated base paper, medium-quality paper, a general liner and core, neutral pure white roll paper, a neutral liner, a rust-proof liner, and metal pasted paper, and kraft paper. The present disclosure can also be used, for example, in neutral printing writing paper, neutral coated base paper, neutral PPC paper, neutral thermal paper, neutral pressure-sensitive base paper, neutral inkjet paper and neutral information paper.

As pulp raw materials, any of bleached or unbleached chemical pulp such as kraft pulp or sulfite pulp; bleached or unbleached high-yield pulp such as groundwood pulp, mechanical pulp, or thermomechanical pulp; and wastepaper pulp such as wastepaper of newspapers, magazines, and cardboard, or deinked wastepaper, can be used. Moreover, a blend of the aforementioned pulp raw material and a synthetic fibers such as asbestos, a polyamide, a polyimide, a polyester, a polyolefin, or a polyvinyl alcohol, can also be used.

A sizing agent can be added to improve water resistance of paper. Examples of the sizing agent are a cationic sizing agent, an anionic sizing agent, and a rosin-based sizing agent (for example, an acidic rosin-based sizing agent and a neutral rosin-based sizing agent). The amount of sizing agent may be 0.01 to 5% by weight relative to pulp.

For paper, as chemicals for papermaking used to such an extent that they are usually used, if necessary, paper strengthening agents such as starch, modified starch, carboxymethyl cellulose, and a polyamide polyamine-epichlorohydrin resin, and additives used in production of paper, such as an agglomerating agent, a fixing agent, a yield improver, a dye, a fluorescent dye, a slime control agent, and an antifoaming agent, can be used. Starch and modified starch are preferably used. If necessary, paper can be coated with the water- and oil-repellent agent together with starch, a polyvinyl alcohol, a dye, a coating color, an anti-slip agent, or the like, for example, by a size press, a gate roll coater, a bill blade coater, a calender, or the like.

In external addition, the amount of fluorine-containing compound contained in a coating layer is preferably 0.01 to 2.0 g/m² and particularly 0.1 to 1.0 g/m². The coating layer is preferably formed of the water- and oil-repellent agent and starch and/or modified starch. The solid content of the water- and oil-repellent agent for paper in the coating layer is preferably 2 g/m² or less.

In internal addition, the water- and oil-repellent agent is preferably mixed with pulp so that the amount of water- and oil-repellent agent is 0.01 to 50 parts by weight or 0.01 to 30 parts by weight, for example 0.01 to 10 parts by weight and particularly 0.2 to 5.0 parts by weight, relative to 100 parts by weight of pulp that forms paper.

In external addition, even when employing a so-called pound type two-roll size press treatment in which a treatment liquid is stored between rolls, and base paper is passed through the treatment liquid between the rolls at an arbitrary roll speed and nip pressure, oil-repellency can be imparted to paper.

In external addition treatment, a paper substrate may contain additives such as a sizing agent, a paper strengthening agent, an agglomerating agent, or yield improver or a coagulant. The additives may be nonionic, cationic, anionic or amphoteric. An ionic charge density of the additive may be -10,000 to 10,000 µeq/g, preferably -4,000 to 8,000 µeq/g, and more preferably - 1,000 to 7,000 µeq/g. The additive (solid content or active ingredient) such as a sizing agent, a paper strengthening agent, an agglomerating agent, a yield improver, or a coagulant may be generally used in an amount of 0.1 to 10% by weight (for example, 0.2 to 5.0% by weight) relative to pulp. In the case of a paper substrate containing a cationic additive (for example, a sizing agent, a paper strengthening agent, an agglomerating agent, a yield improver, or a coagulant), the water- and oil-repellent agent may be anionic, and in the case of a paper substrate containing an anionic additive, the water- and oil-repellent agent may be cationic, but paper substrates and additives are not limited thereto.

In internal addition treatment, pulp slurry having a pulp concentration of 0.5 to 5.0% by weight (for example, 2.5 to 4.0% by weight) preferably undergo papermaking. The pulp slurry can be added with an additive (for example, a sizing agent, a paper strengthening agent, an agglomerating agent, a yield improver, or a coagulant) and the fluorine-containing compound. Examples of the additive (for example, a sizing agent, a paper strengthening agent, an agglomerating agent, a yield improver, or a coagulant) include an alkyl ketene dimer, an alkenyl succinic anhydride, a styrenic polymer (styrene/maleic acid polymer, styrene/acrylic acid-based polymer), a urea-formaldehyde polymer, a polyethyleneimine, a melamine-formaldehyde polymer, a polyamideamine-epichlorohydrin polymer, a polyacrylamide-based polymer, a polyamine-based polymer, a polydiallyldimethylammonium chloride, an alkylamine·epichlorohydrin condensate, a condensate of alkylene dichloride and polyalkylene polyamine, a dicyandiamide·formalin condensate, a dimethyldiallylammonium chloride polymer, and an olefin/maleic anhydride polymer.

In the internal addition treatment, the paper substrate may contain an additive such as a sizing agent, a paper strengthening agent, an agglomerating agent, a yield improver or a coagulant. The additive may be nonionic, cationic, anionic or amphoteric. The additive may have an ionic charge density of -10,000 to 10,000 µeq/g, preferably -4,000 to 8,000 µeq/g, and more preferably -1,000 to 7,000 µeq/g. The additive (solid content or active ingredient) such as a sizing agent, a paper strengthening agent, an agglomerating agent, a yield improver, or a coagulant may be generally used in an amount of 0.1 to 10% by weight (for example, 0.2 to 5.0% by weight) relative to pulp. In the case of a paper substrate containing a cationic additive (for example, a sizing agent, a paper strengthening agent, an agglomerating agent, a yield improver, or a coagulant), the water- and oil-repellent agent may be anionic, and in the case of a paper substrate containing an anionic additive, the water- and oil-repellent agent may be cationic, but paper substrates and additives are not limited thereto.

The oil resistance (KIT method) of the paper product treated may be measured according to TAPPI T-559cm-02. In this regard, the paper product may be externally treated. The KIT test liquid is prepared by mixing castor oil, toluene and heptane at the proportion shown in the following table. A drop of the test solution shown in the table is placed on the paper and after 15 seconds how the oil permeates the paper is observed. The highest score of the oil resistance provided by the KIT test liquid without permeation is determined as oil resistance. A higher number of the KIT test liquid indicates higher oil resistance.

### Mixing ratio (vol%)

| Score of oil resistance (KIT test liquid) | Castor oil | Toluene | Heptane |
|---|---|---|---|
| 1 | 100 | 0 | 0 |
| 2 | 90 | 5 | 5 |
| 3 | 80 | 10 | 10 |
| 4 | 70 | 15 | 15 |
| 5 | 60 | 20 | 20 |
| 6 | 50 | 25 | 25 |
| 7 | 40 | 30 | 30 |
| 8 | 30 | 35 | 35 |
| 9 | 20 | 40 | 40 |
| 10 | 10 | 45 | 45 |
| 11 | 0 | 45 | 55 |
| 12 | 0 | 50 | 50 |

The high temperature oil resistance of the treated paper product may be measured as follows. In this regard, the paper product may be internally treated. 100 ml of corn oil at 65°C is put in a molded pulp product shaped on a container, and after leaving it for 30 minutes, the corn oil is removed therefrom, and how much the oil penetrates into the molded pulp is assessed by the following criteria.
4: Substantially no oil stain on inside bottom of container
3: No oil stain on outside bottom of container
2: Oil stain on less than 5% of area of outside bottom of container
1: Oil stain on 5% or more and less than 50% of area of outside bottom of container
0: Oil stain on 50% or more of area of outside bottom of container

The high temperature water resistance of the treated paper product may be measured as follows. In this regard, the paper product may be internally treated. 100 ml of hot water at 80°C is put in a molded pulp product shaped on a container, and after leaving it for 30 minutes, the hot water is removed therefrom, and how much the water penetrates into the molded pulp is assessed by the following criteria.
4: Substantially no water stain on inside bottom of container
3: No water stain on outside bottom of container
2: Water stain on less than 5% of area of outside bottom of container
1: Water stain on 5% or more and less than 50% of area of outside bottom of container
0: Water stain on 50% or more of area of outside bottom of container

### [Pretreatment of Fiber Product]

The fiber product may be pretreated before being treated with the water- and oil-repellent agent of the present disclosure. Pretreatment of the fiber product enables imparting excellent fastness to a fiber product after treated with the water- and oil-repellent agent.

Examples of the pretreatment of fiber product include, for example, cationization treatment such as reaction with a reactive quaternary ammonium salt, anionization treatment such as sulfonation, carboxylation, and phosphorylation, acetylation treatment after the anionization treatment, benzoylation treatment, carboxymethylation treatment, graft treatment, tannic acid treatment, and polymer coating treatment.

A method for pretreating the fiber product is not limited, but the fiber product can be pretreated by a conventionally known method. A method for dispersing a pretreatment liquid in an organic solvent or water, if necessary, to dilute the pretreatment liquid and adhering it to an inside of the fiber product and/or on a surface thereof by a known method such as dip coating, spray coating, or foam coating, and drying the liquid may be employed. The pH, temperature, etc. of the pretreatment liquid may be adjusted according to an extent of treatment desired. As an example of the method for pretreating a fiber product, a method for pretreating a fiber product with the treatment agent described above will be described in detail.

The pretreatment method of a fiber product may involve a step of imparting a fiber with one or more functional groups (hereinafter sometimes referred to as "specific functional groups") selected from the group consisting of the monovalent group represented by -SO₃M¹, wherein M¹ represents a monovalent cation or the monovalent group represented by -COOM², wherein M² represents a monovalent cation, and the monovalent group represented by -O-P(O)(OX¹)(OX²), wherein X¹ and X² each independently represent a hydrogen atom or an alkyl group having 1 to 22 carbon atoms.

Examples of M¹ include H, K, Na, or an ammonium ion which may have a substituent. Examples of M² include H, K, Na, or an ammonium ion which may have a substituent. When X¹ or X² is an alkyl group, it is preferably an alkyl group having 1 to 22 carbon atoms and more preferably an alkyl group having 4 to 12 carbon atoms.

A fiber containing the above specific functional group (hereinafter sometimes referred to as a "functional group-containing fiber") can be prepared, for example, by the following method.
(i) A compound having the above specific functional group is allowed to adhere to a fiber material. The adhesion of the compound may be in a condition such that a portion of the compound and a portion of the fibers are chemically bonded as long as the above specific functional groups remain in a sufficient amount.
(ii) A fiber is prepared by directly introducing the above specific functional group into the material constituting the fiber.

In the case of (i), for example, a functional group-containing fiber can be obtained by treating the fiber material with a pretreatment liquid containing one or more compounds having the above specific functional group, namely, by the step of introducing the functional group.

Materials used for the fiber material, are not limited, and examples thereof include natural fibers such as cotton, linen, silk, and wool, semi-synthetic fibers such as rayon and acetate, synthetic fibers such as a polyamide (nylon, etc.), a polyester, a polyurethane, and a polypropylene, composite fibers thereof, blended fibers, and the like. A form of the fiber material may be any form such as a fiber (tow, sliver, etc.), a yarn, a knitted fabric (including an interknitted fabric), a woven fabric (including an interwoven fabric), or a nonwoven fabric.

In the present embodiment, from the viewpoint of improving water-repellency of the obtained textile product, a fiber material containing a polyamide and a polyester as raw materials, is preferably used, and in particular, nylon such as nylon 6, or nylon 6,6, a polyester such as a polyethylene terephthalate (PET), a polytrimethyl terephthalate, or polylactic acid, and blended fibers containing these, are preferably used.

A Phenolic polymer can be used as the compound having -SO₃M¹ described above. Examples of such a phenolic polymer include that containing at least one of compounds represented by the following general formula: 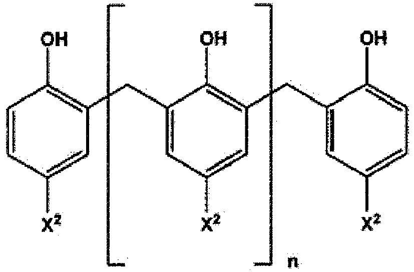 wherein X² represents -SO₃M³, wherein M³ represents a monovalent cation, or a group represented by the following general formula, and n is an integer of 20 to 3,000. 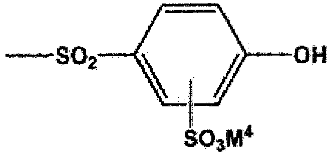 wherein M⁴ represents a monovalent cation.

Examples of M³ includes H, K, Na or an ammonium ion that may have a substituent.

Examples of M⁴ include H, K, Na or an ammonium ion which may have a substituent.

The compounds represented by the general formula above may be, for example, formalin condensates of phenol sulfonic acid and formalin condensates of sulfonated bisphenol S.

Examples of the compound having -COOM² above include a polycarboxylic acid-based polymer.

As the polycarboxylic acid-based polymer, for example, a polymer synthesized by a conventionally known radical polymerization method using acrylic acid, methacrylic acid, maleic acid, or the like as a monomer, or a commercially available polymer, can be used.

A method for producing the polycarboxylic acid-based polymers may include, for example, adding a radical polymerization initiator to an aqueous solution of the aforementioned monomer and/or salt thereof and heating and reacting the mixture at 30 to 150°C for 2 to 5 hours. At this time, an aqueous solution of the above monomer and/or salt thereof may be added with aqueous solvents such as alcohols such as methanol, ethanol, and isopropyl alcohol, and acetone. Examples of the radical polymerization initiator include persulfates such as potassium persulfate, sodium persulfate, and ammonium persulfate, redox polymerization initiators in combination of the persulfate and sodium bisulfite or the like, hydrogen peroxide, and a water-soluble azo-based polymerization initiator. These radical polymerization initiators may be used singly or in combination of two or more thereof. Furthermore, a chain transfer agent (for example, octyl thioglycolate) may be added upon radical polymerization for the purpose of adjusting the degree of polymerization.

In addition to the aforementioned monomers, a copolymerizable monomer can be used for radical polymerization. Examples of the copolymerizable monomer include vinyl-based monomers such as ethylene, vinyl chloride, and vinyl acetate, an acrylamide, acrylates, and methacrylates. The acrylates and methacrylates preferably have a hydrocarbon group having 1 to 3 carbon atoms, which may have a substituent such as a hydroxyl group. Examples of such acrylates or methacrylates include methyl acrylate, methyl methacrylate, ethyl acrylate, ethyl methacrylate, 2-hydroxyethyl acrylate, 2-hydroxyethyl methacrylate, propyl acrylate, propyl methacrylate, and the like. These copolymerizable monomers may be used singly or in combination of two or more thereof.

A carboxyl group in the polycarboxylic acid-based polymer may be free or may be neutralized with an alkali metal, an amine-based compound, or the like. Examples of the alkali metal include sodium, potassium, lithium, and the like, and examples of the amine-based compound include ammonia, monoethanolamine, diethanolamine, triethanolamine, and the like.

The weight-average molecular weight of the polycarboxylic acid-based polymer is preferably 1,000 to 20,000 and more preferably from 3,000 to 15,000, from the viewpoint of favorable water-repellency of the resulting textile product.

As the polycarboxylic acid-based polymer, commercially available products such as "Neocrystal 770" (trade name, manufactured by NICCA CHEMICAL CO., LTD.) and "Ceropol PC-300" (trade name, manufactured by Sanyo Chemical Industries, Ltd.) can be used.

Examples of the compound having -O-P(O)(OX¹)(OX²) as described above include phosphoric acid ester compounds represented by the following general formula: 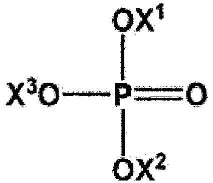 wherein, X¹ or X² is the same as defined above, and X³ represents an alkyl group having 1 to 22 carbon atoms.

As the aforementioned phosphoric acid ester compound, phosphoric acid monoesters, diesters and triesters, and mixtures thereof can be used in which the alkyl ester moiety is an alkyl group having 1 to 22 carbon atoms.

In view of favorable water-repellency of the textile products to be obtained, lauryl phosphoric acid ester and decyl phosphoric acid ester are preferably used.

As the phosphoric acid ester compound, for example, a commercially available product such as "Phosphanol ML-200" (trade name, manufactured by TOHO Chemical Industry Co., Ltd.) can be used.

A pretreatment liquid containing one or more of the compounds having the aforementioned specific functional group can be, for example, an aqueous solution of the compound described above. The pretreatment liquid may also contain an acid, alkali, surfactant, chelating agent, and the others.

Examples of the method for treating a fiber material with the above pretreatment liquid include padding treatment, dip treatment, spray treatment, and coating treatment. Examples of padding treatment include the method involving using the padding apparatus as described on pages 396 to 397 of Seni Sensyoku Kako Jiten (in Japanese; Fiber-dyeing process dictionary) (published by THE NIKKAN KOGYO SHIMBUN, LTD., 1963) and pages 256 to 260 of Irozome Kagaku (in Japanese; dyeing chemistry) III (published by Jikkyo Shuppan Co., Ltd., 1975). Examples of the coating treatment include the method involving using a coating machine as described on pages 473 to 477 of Sensyoku Shiage Kiki Soran (in Japanese; Comprehensive guide to dyeing and finishing machines) (published by Fiber Japan CO., LTD., 1981). Examples of the dip treatment include the method involving using a batch type dyeing machine as described in pages 196 to 247 of Sensyoku Shiage Kiki Soran (in Japanese) (published by Fiber Japan CO., LTD., 1981), and for example, a jet dyeing machine, air flow dyeing machine, drum dyeing machine, wince dyeing machine, washer dyeing machine, and cheese dyeing machine can be used. Examples of the spray treatment includes a method involving using an air spray that nebulizes and sprays a treatment liquid by compressed air, or an air spray by hydraulic pressure nebulization system. In this case, the concentration of the treatment liquid and treatment conditions of heat treatment after application can be adjusted appropriately, taking into consideration various conditions such as their purposes and performance. Moreover, in a case in which the pretreatment liquid contains water, it is preferably dried to remove water after the pretreatment liquid has been allowed to adhere to the fiber material. The drying method are not limited, and either a dry heat method or a wet heat method may be employed. Drying temperatures are also not limited, and for example, drying may be carried out at room temperature to 200°C for 10 seconds to several days. Heat treatment at a temperature of 100 to 180°C for about 10 seconds to 5 minutes may be carried out after the drying, as necessary.

In a case in which a fiber material is such that it is to be dyed, treatment with the pretreatment liquid may be carried out before dyeing or in the same bath as in dyeing, but in the case of carrying out reduction soaping, a compound with the above specified functional group (for example, a phenolic polymer compound or the like) adsorbed in the process may fall off, and therefore the treatment with the pretreatment liquid is preferably carried out after the reduction soaping after dyeing.

The treatment temperature in the dip treatment can be 60 to 130°C. The treatment time can be 5 to 60 minutes.

The step of introducing a functional group by the pretreatment liquid is preferably carried out so that the amount of compound having the above specified functional group adhered is 1.0 to 7.0 parts by weight relative to 100 parts by weight of a fiber material. Within this range, both durable water-repellency and texture can be achieved at a high level.

The pH of the pretreatment liquid may be adjusted to less than 7, for example, 3 to 5. The pH adjustment can be carried out by using a pH adjuster such as acetic acid or malic acid.

A salt can be used in combination with the pretreatment liquid to adsorb the compound having the aforementioned specific functional group effectively onto the fiber material by a salting effect. Examples of the salt that can be used include, for example, sodium chloride, sodium carbonate, ammonium sulfate, and sodium sulfate.

In the step of introducing the functional group by the pretreatment liquid, an excess amount of the compound having the aforementioned specific functional group, which has been given by the treatment, is preferably removed. Examples of the removal method include washing with water. Sufficient removal can avoid inhibition of development of water-repellency in the subsequent water-repellent treatment, and additionally, the textile product to be obtained has the favorable texture. The resulting functional group-containing fiber is preferably fully dried prior to contact with the treatment agent described above.

Examples of (ii) the fiber in which the aforementioned specific functional group has been introduced directly into the material forming the fiber include a cation-dyeable polyester (CD-PET).

In view of favorable water-repellency of the textile products to be obtained, the functional group-containing fiber preferably has a zeta potential of its surface of - 100 to -0.1 mV and more preferably -50 to -1 mV. The zeta potential of the fiber surface can be measured, for example, using a zeta potential and particle size measurement system, ELSZ-1000ZS (manufactured by Otsuka Electronics Co., Ltd.).

Embodiments have been described above, but it will be understood that various modifications can be made to embodiments and details without departing from the spirit and the scope of the claims.

### Examples

The present disclosure will be described in more detail below by way of Examples, but the present disclosure is not limited to these Examples.

### <Production Method>

### [Production Example 1]

A 50 ml three-neck flask equipped with a stirrer, a thermometer and a condenser was charged with 4.0 g of 4-trifluoromethoxyphenol and 4-methyl-2-pentanone (MIBK, 16 g). Then the solution was cooled to 50°C, and 3.8 g of Desmodur N3200A (made by Sumika Bayer Urethane Co., Ltd.) and a drop of dibutyltin dilaurate were added thereto, and the solution was heated at 80°C for 4 hours to give Compound 1 with a solid content of 33%.

### [Production Example 2]

A 50 ml three-neck flask equipped with a stirrer, a thermometer and a condenser was charged with 3.4 g of 4-trifluoromethoxyphenol, 6.0 g of sorbitan monostearate and 4-methyl-2-pentanone (MIBK, 16 g). Then the solution was cooled to 50°C, and 6.6 g of Desmodur N3200A (made by Sumika Bayer Urethane Co., Ltd.) and a drop of dibutyltin dilaurate were added thereto, and the solution was heated at 80°C for 4 hours to give Compound 2 with a solid content of 50%.

### [Production Example 3]

A 50 ml three-neck flask equipped with a stirrer, a thermometer and a condenser was charged with 4.0 g of 4-trifluoromethoxyphenol, 1.3 g of N-methyldiethanolamine and 4-methyl-2-pentanone (MIBK, 19 g). Then the solution was cooled to 50°C, and 7.6 g of Desmodur N3200A (made by Sumika Bayer Urethane Co., Ltd.) and a drop of dibutyltin dilaurate were added thereto, and the solution was heated at 80°C for 4 hours to give Compound 3 with a solid

### content of 40%.

### [Comparative Example 1]

A 50 ml three-neck flask equipped with a stirrer, a thermometer and a condenser was charged with 5.0 g of 4-methoxyphenol and 4-methyl-2-pentanone (MIBK, 12 g). Then the solution was cooled to 50°C, and 7.0 g of Desmodur N3200A (made by Sumika Bayer Urethane Co., Ltd.) and a drop of dibutyltin dilaurate were added thereto, and the solution was heated at 80°C for 4 hours to give Compound 4 with a solid content of 50%.

### [Comparative Example 2]

A 50 ml three-neck flask equipped with a stirrer, a thermometer and a condenser was charged with 2.7 g of 4-methoxyphenol, 7.0 g of sorbitan monostearate and 4-methyl-2-pentanone (MIBK, 17 g). Then the solution was cooled to 50°C, and 7.6 g of Desmodur N3200A (made by Sumika Bayer Urethane Co., Ltd.) and a drop of dibutyltin dilaurate were added thereto, and the solution was heated at 80°C for 4 hours to give Compound 5 with a solid content of 50%.

### [Comparative Example 3]

A 50 ml three-neck flask equipped with a stirrer, a thermometer and a condenser was charged with 3.6 g of 4-methoxyphenol, 1.7 g of N-methyldiethanolamine and 4-methyl-2-pentanone (MIBK, 15 g). Then the solution was cooled to 50°C, and 10.1 g of Desmodur N3200A (made by Sumika Bayer Urethane Co., Ltd.) and a drop of dibutyltin dilaurate were added thereto, and the solution was heated at 80°C for 4 hours to give Compound 6 with a solid content of 51%.

### <Method for producing treatment liquid>

The solutions prepared in Production Examples 1 to 3 were diluted with methyl ethyl ketone (MEK) to give 200 g each of treatment liquids 1 to 6 having a solid concentration of 1.0% or 2.0%.

The solutions prepared in Comparative Examples 1 to 3 were diluted with methyl ethyl ketone (MEK) to give 200 g each of treatment liquids 7 to 12 having a solid concentration of 1.0% or 2.0%. The treatment liquids are listed in Table 1.

### <Evaluation of treated fabric>

### {Method for treating fabric}

Two types of fabric, i.e., a nylon fabric and a PET fabric, were used.

Each of the two fabrics was put in a 500 ml plastic bottle containing 200 g of the treatment liquid 1 to 12 prepared, and the bottle was shaken for 10 seconds to allow the treatment liquid to be applied to the fabric. The fabric was removed from the treatment liquid, and then put in a centrifugal device and centrifuged at 1,000 rpm for 30 seconds. Subsequently, the fabric was dried at room temperature for 24 hours and then heated at 160°C for 2 minutes.

### {Water-Repellency Test}

The water-repellency of the treated fabric was evaluated by visually observing wet conditions according to the spray method in JIS-L-1092 (AATCC-22) based on the following criteria. The results are represented by the number of water-repellency as described in the following table. A higher score indicates higher water-repellency. The results are shown in Table 2.
⊚ (100): Surface not wet, no water droplet attached
○ (90): Surface not wet but small water droplets attached
△ (80): Surface wet with small water droplets
× (70 or less): Half or more of surface wet, water absorbed into some part

### {Oil-Repellency Test}

Conditions 30 seconds after putting droplets of an IPA/water 10/90 solution on the treated fabric were visually assessed based on the following criteria.

The results are shown in Table 3.
⊚ : No droplets absorbed, keeping round shape.
∘ : Few droplets absorbed, keeping shape of droplets.
△ : Some droplets absorbed, some remain.
× : Droplets completely absorbed, stains distributed.

### <Evaluation of treated paper>

### {Preparation of treated paper}

Each of the treatment liquids 1 to 12 was applied three times to thin paper having a water-repellency (Cobb value) of 52 g/m², a basis weight of 45 g/m² and a density of 0.60 g/m³ by a Baker applicator whose gap was set to 0 mil. Then the paper was annealed at 140°C for 1 minute to give a treated paper.

### {KIT test (oil resistance)}

Oil resistance was measured by 3M KIT test (TAPPI T-559cm-02). In the 3M KIT test method, test oil prepared by mixing castor oil, toluene and heptane was put on the surface of the treated paper, and when the test oil was wiped off after 15 seconds, the treated paper is evaluated for the presence or absence of oil staining. The test was performed using test oils of KIT Nos. 1 to 6, and the maximum KIT number without stain was regarded as the result of evaluation of oil resistance. The results of observation are shown in Table 4.

**Table 1: List of treatment liquids**

| | Polymer | Diluting solvent | Concentration (%) |
|---|---|---|---|
| Treatment liquid 1 | Production Example 1 | MEK | 1 |
| Treatment liquid 2 | Production Example 1 | MEK | 2 |
| Treatment liquid 3 | Production Example 2 | MEK | 1 |
| Treatment liquid 4 | Production Example 2 | MEK | 2 |
| Treatment liquid 5 | Production Example 3 | MEK | 1 |
| Treatment liquid 6 | Production Example 3 | MEK | 2 |
| Treatment liquid 7 | Comparative Example 1 | MEK | 1 |
| Treatment liquid 8 | Comparative Example 1 | MEK | 2 |
| Treatment liquid 9 | Comparative Example 2 | MEK | 1 |
| Treatment liquid 10 | Comparative Example 2 | MEK | 2 |
| Treatment liquid 11 | Comparative Example 3 | MEK | 1 |
| Treatment liquid 12 | Comparative Example 3 | MEK | 2 |

**Table 2: Evaluation of water-repellency of treated fabric**

| Evaluation No. | Polymer | Treatment liquid | Water-repellency | |
|---|---|---|---|---|
| Type of fabric | | | Nylon | PET |
| Evaluation 1 | Production Example 1 | Treatment liquid 1 | 60 | 60 |
| Evaluation 2 | Production Example 2 | Treatment liquid 3 | 80 | 70 |
| Evaluation 3 | Production Example 3 | Treatment liquid 5 | 60 | 60 |
| Evaluation 4 | Comparative Example 1 | Treatment liquid 7 | 40 | 50 |
| Evaluation 5 | Comparative Example 2 | Treatment liquid 9 | 60 | 50 |
| Evaluation 6 | Comparative Example 3 | Treatment liquid 11 | 40 | 50 |

**Table 3: Evaluation of oil-repellency of treated fabric**

| Evaluation No. | Polymer | Treatment liquid | Oil-repellency | |
|---|---|---|---|---|
| Type of fabric | | | Nylon | PET |
| Evaluation 7 | Production Example 1 | Treatment liquid 1 | ○ | △ |
| Evaluation 8 | Production Example 2 | Treatment liquid 3 | ⊚ | ⊚ |
| Evaluation 9 | Production Example 3 | Treatment liquid 5 | △ | △ |
| Evaluation 10 | Comparative Example 1 | Treatment liquid 7 | △ | × |
| Evaluation 11 | Comparative Example 2 | Treatment liquid 9 | ○ | ○ |
| Evaluation 12 | Comparative Example 3 | Treatment liquid 11 | × | × |

**Table 4: Evaluation of oil resistance of treated paper**

| Evaluation No. | Polymer | Treatment liquid | KIT value |
|---|---|---|---|
| Evaluation 13 | Production Example 1 | Treatment liquid 1 | 2 |
| Evaluation 14 | Production Example 1 | Treatment liquid 2 | 2 |
| Evaluation 15 | Production Example 2 | Treatment liquid 3 | 3 |
| Evaluation 16 | Production Example 2 | Treatment liquid 4 | 4 |
| Evaluation 17 | Production Example 3 | Treatment liquid 5 | 2 |
| Evaluation 18 | Production Example 3 | Treatment liquid 6 | 2 |
| Evaluation 19 | Comparative Example 1 | Treatment liquid 7 | 1 |
| Evaluation 20 | Comparative Example 1 | Treatment liquid 8 | 1 |
| Evaluation 21 | Comparative Example 2 | Treatment liquid 9 | 2 |
| Evaluation 22 | Comparative Example 2 | Treatment liquid 10 | 2 |
| Evaluation 23 | Comparative Example 3 | Treatment liquid 11 | 1 |
| Evaluation 24 | Comparative Example 3 | Treatment liquid 12 | 1 |

## Claims

1. A fluorine-containing compound comprising:
a moiety derived from an active hydrogen-containing compound (a);
a moiety derived from an active hydrogen reactive compound (b); and
-NHCO- derived from the compound (a) and the compound (b),
wherein
the compound (a) comprises a compound (a1) having R^{f1} or R^{f2}, or the compound (b) comprises a compound (b1) having R^{f1} or R^{f2},
R^{f1} is -CF₃, -CF₂H or -CFH₂,
R^{f2} is -CF₂- or -CFH-,
and R^{f1} and R^{f2} do not constitute a moiety of a fluoroalkyl group having 2 or more carbon atoms.

2. The fluorine-containing compound according to claim 1, wherein the fluorine-containing compound has an oxygen atom or a nitrogen atom in a position adjacent to the R^{f1}, and has an oxygen atom or a nitrogen atom in at least one of positions adjacent to the R^{f2}.

3. The fluorine-containing compound according to claim 1 or 2, wherein
the R^{f1} is CF₃-, and
the R^{f2} is -CF₂-.

4. The fluorine-containing compound according to any one of claims 1 to 3, wherein the compound (a) comprises alcohol, the compound (b) comprises isocyanate and the fluorine-containing compound is polyurethane.

5. The fluorine-containing compound according to any one of claims 1 to 4, wherein the compound (a1) or the compound (b1) comprises a group represented by the formula:
-Y^{f}-Z^{f}_{α}-
wherein, independently at each occurrence,
Y^{f} is a 1+α valent group composed of one or more selected from the group consisting of Y^{f1} and Y^{f2},
Y^{f1} is a group composed of one or more selected from the group consisting of a direct bond, -O-, -C(=O)-, - C(=NR')-, -S-, -S(=O)₂-, -NR'-, -C(OR')R'-, -C(OR')(-)₂ and -N(-)₂, wherein R' is a hydrogen atom or an organic group,
Y^{f2} is a group composed of one or more selected from the group consisting of an aliphatic group and an aromatic group,
Z^{f} is R^{f1} or a hydrocarbon group having 2 or more and 40 or less carbon atoms and including R^{f1} or R^{f2}; and
α is 1 to 3.

6. The fluorine-containing compound according to any one of claims 1 to 5, wherein the compound (a1) or the compound (b1) comprises a group represented by the formula:
-Y^{f11}-(Y^{f21}-Y^{f12})_{β}-Y^{f22}-Y^{f13}-Z^{f}
wherein, independently at each occurrence,
Y^{f11} is a direct bond, -O-, -NH- or -C(=O)-,
Y^{f21} is a group composed of one or more selected from the group consisting of an aliphatic group and an aromatic group,
Y^{f12} is a group composed of one or more selected from the group consisting of -O-, -C(=O)-, -C(=NR')-, -S-, - S(=O)₂-, -NR'- and -C(OR')R'-, wherein R' is a hydrogen atom or an organic group,
β is 0 to 3,
Y^{f22} is a group composed of one or more selected from the group consisting of an aliphatic group and an aromatic group,
Y^{f13} is -O-, -O-C(=O)-O-, -O-C(=O)-NR'-, -NR'-, -NR'-C(=O)-O-, -NR'-C(=O)-NR'-, -C(=O)-O-, -C(=O)-NR'- or - SO₂NR'-, wherein R' is a hydrogen atom or an organic group, and
Z^{f} is R^{f1} or a hydrocarbon group having 2 or more and 40 or less carbon atoms and including R^{f1} or R^{f2}.

7. The fluorine-containing compound according to claim 6, wherein
Y^{f22} is a group represented by the formula:
-Y^{f221}-Y^{f222}-
wherein
Y^{f221} is a direct bond or a hydrocarbon group having 2 to 40 carbon atoms, and
Y^{f222} is a direct bond or a phenylene group,
Y^{f13} is -O- or -NR'-, wherein R' is a hydrogen atom or an organic group,
β is 0 or 1, and
Z^{f} is R^{f1}.

8. The fluorine-containing compound according to any one of claims 1 to 7, wherein the compound (a) comprises the compound (a1).

9. The fluorine-containing compound according to any one of claims 1 to 8, wherein the compound (a) comprises an active hydrogen-containing compound (a2) comprising a hydrocarbon group having 6 or more and 40 or less carbon atoms.

10. The fluorine-containing compound according to claim 9, wherein the compound (a2) is a sugar alcohol and/or hydroxy acid in which a hydrocarbon group having 6 or more and 40 or less carbon atoms is modified.

11. The fluorine-containing compound according to any one of claims 1 to 10, wherein the compound (a) comprises another active hydrogen-containing compound (a3).

12. The fluorine-containing compound according to claim 11, wherein the compound (a3) comprises a chain extender.

13. The fluorine-containing compound according to any one of claims 1 to 12, wherein the compound (b) is selected from the following compounds:
an aromatic polyisocyanate selected from tolylene diisocyanate (2,4- or 2,6-tolylene diisocyanate or a mixture thereof) (TDI), phenylene diisocyanate (m-, p-phenylene diisocyanate or a mixture thereof, 4,4'-diphenyl diisocyanate, diphenylmethane diisocyanate (4,4'-, 2,4' or 2,2'-diphenylmethane diisocyanate or a mixture thereof) (MDI), 4,4'-toluidine isocyanate (TODI), 4,4'-diphenyl ether diisocyanate, xylylene diisocyanate (1,3- or 1,4-xylylene diisocyanate or a mixture thereof) (XDI), tetramethyl xylylene diisocyanate (1,3- or 1,4-tetramethylxylylene diisocyanate or a mixture thereof) (TMXDI), ω,ω'-diisocyanate-1,4-diethylbenzene, naphthalene diisocyanate (1,5-, 1,4- or 1,8-naphthalene diisocyanate or a mixture thereof) (NDI), triphenylmethane triisocyanate, tris(isocyanate phenyl)thiophosphate, polymethylene polyphenylene polyisocyanate, nitrodiphenyl-4,4'-diisocyanate, 3,3'-dimethyldiphenylmethane-4,4'-diisocyanate, 4,4'-diphenylpropane diisocyanate and 3,3'-dimethoxydiphenyl-4,4'-diisocyanate;
an acyclic aliphatic polyisocyanate selected from trimethylene diisocyanate, 1,2-propylene diisocyanate, butylene diisocyanate (tetramethylene diisocyanate, 1,2-butylene diisocyanate, 2,3-butylene diisocyanate, 1,3-butylene diisocyanate), hexamethylene diisocyanate, pentamethylene diisocyanate, 2,2,4-trimethylhexamethylene diisocyanate, 2,4,4-trimethylhexamethylene diisocyanate, 2,6-diisocyanatomethylcaproate, lysine diisocyanate, lysine ester triisocyanate, 1,6,11-undecane triisocyanate, 1,3,6-hexamethylene triisocyanate, trimethylhexamethylene diisocyanate and decamethylene diisocyanate;
an alicyclic polyisocyanate selected from 1,3-cyclopentane diisocyanate, 1,3-cyclopentene diisocyanate, cyclohexane diisocyanate (1,4-cyclohexane diisocyanate, 1,3-cyclohexane diisocyanate), 3-isocyanatomethyl-3,5,5-trimethylcyclohexyl isocyanate (isophorone diisocyanate, IPDI), methylene bis(cyclohexyl isocyanate (4,4'-, 2,4'- or 2,2'-methylene bis(cyclohexyl isocyanate or a mixture thereof) (hydrogenated MDI), methylcyclohexane diisocyanate (methyl-2,4-cyclohexane diisocyanate, methyl-2,6-cyclohexane diisocyanate, bis(isocyanatomethyl)cyclohexane (1,3- or 1,4-bis(isocyanatomethyl)cyclohexane or a mixture thereof) (hydrogenated XDI), dimer acid diisocyanate, transcyclohexane 1,4-diisocyanate, hydrogenated tolylene diisocyanate (hydrogenated TDI) and hydrogenated tetramethylxylylene diisocyanate (hydrogenated TMXDI);
a bridged alicyclic polyisocyanate selected from norbornene diisocyanate, norbornane diisocyanatomethyl, bicycloheptane triisocyanate, diisocyanatomethyl bicycloheptane and di(diisocyanatomethyl)tricyclodecane; 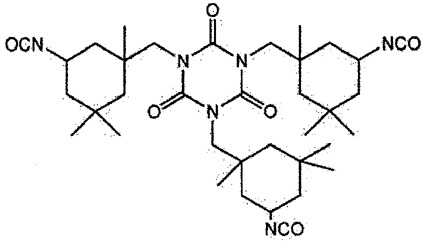 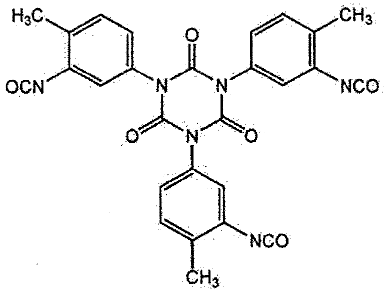 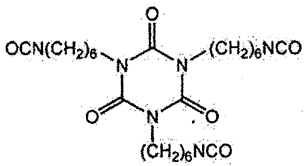 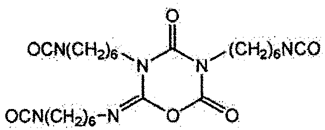 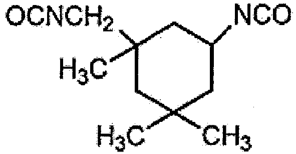 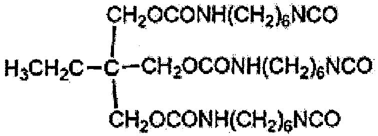 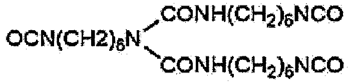 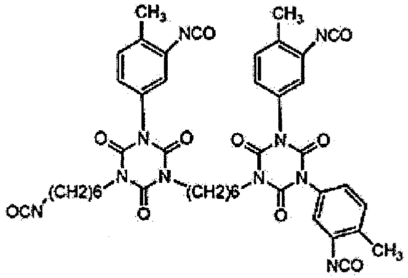 and
a compound selected from a multimer (dimer, trimer, pentamer, heptamer, uretidinedione, uretonimine, isocyanurate modified product and polycarbodiimide), a biuret modified product and other derivatives of the above.

14. The fluorine-containing compound according to claim 13, wherein
the compound (a) comprises a compound (a1), and
the compound (a1) comprises a group represented by the formula:
-Y^{f11}-(Y^{f21}-Y^{f12})_{β}-Y^{f22}-Y^{f13}-Z^{f}
wherein, independently at each occurrence,
Y^{f11} is a direct bond, -O-, -NH- or -C(=O)-,
Y^{f21} is a group composed of one or more selected from the group consisting of an aliphatic group and an aromatic group,
Y^{f12} is a group composed of one or more selected from the group consisting of -O-, -C(=O)-, -C(=NR')-, -S-, - S(=O)₂-, -NR'- and -C(OR')R'-, wherein R' is a hydrogen atom or an organic group,
β is 0 to 3,
Y^{f22} is a group composed of one or more selected from the group consisting of an aliphatic group and an aromatic group,
Y^{f13} is -O-, -O-C(=O)-O-, -O-C(=O)-NR'-, -NR'-, -NR'-C(=O)-O-, -NR'-C(=O)-NR'-, -C(=O)-O-, -C(=O)-NR'- or - SO₂NR'-, wherein R' is a hydrogen atom or an organic group, and
Z^{f} is -CF₃.

15. A dispersion comprising the fluorine-containing compound according to any one of claims 1 to 14 and a liquid medium.

16. A water- and oil-repellent agent comprising the fluorine-containing compound according to any one of claims 1 to 14.

17. The water- and oil-repellent agent according to claim 16, further comprising another non-fluorine water- and oil-repellent component.

18. The water- and oil-repellent agent according to claim 16 or 17, which is for a textile product or a paper product.

19. A method for producing a treated substrate, comprising treating the substrate with the water- and oil-repellent agent according to any one of claims 16 to 18.

20. The production method according to claim 19, wherein the substrate is a textile product or a paper product.

21. A product to which the fluorine-containing compound according to any one of claims 1 to 14 is adhered.
